# EUROPÄISCHE PATENTSCHRIFT

(11) **EP 3 524 110 B1**
(45) Veröffentlichungstag und Bekanntmachung des Hinweises auf die Patenterteilung: **17.07.2024**
(21) Anmeldenummer: 19164014.3
(22) Anmeldetag: 08.02.2013
(51) Int. Cl.: A47L 9/00, A47L 9/28, H01R 9/24, H01R 13/52, H01R 13/66, H01R 24/00, H01R 27/02, H02J 7/00

(54) **SAUGGERÄT MIT EINER LADEEINRICHTUNG**
SUCTION DEVICE WITH A CHARGER
APPAREIL D'ASPIRATION DOTÉ D'UN DISPOSITIF DE RECHARGE

(30) Priorität: 17.02.2012 DE 102012003075
(43) Veröffentlichungstag der Anmeldung: 14.08.2019
(62) Teilanmeldung aus: 13000691.9
(73) Patentinhaber: Festool GmbH, 73240 Wendlingen am Neckar (DE)
(72) Erfinder: Barabeisch, Markus, 89269 Vöhringen (DE)
(74) Vertreter: Patentanwälte Bregenzer und Reule Partnerschaftsgesellschaft mbB

(56) Entgegenhaltungen:
- EP-A1- 2 451 001
- EP-A2- 2 229 857
- WO-A1-2006/084561
- DE-A1- 102008 054 489
- US-A1- 2004 088 817
- US-A1- 2011 239 398

## Beschreibung

Die Erfindung betrifft ein Sauggerät zum Absondern von Partikeln aus einem Saugstrom, mit einem Saugmotor zum Erzeugen des Saugstroms und mit einem Saugergehäuse, in dem der Saugmotor und ein Staubsammelraum zum Sammeln der aus dem Saugstrom abgesonderten Partikel angeordnet ist gemäß dem Oberbegriff des Anspruchs 1.

Ein derartiges Sauggerät ist beispielsweise aus DE 10 2008 054 489 A1 bekannt.

Ein Sauggerät gemäß DE 10 2009 015 642 A1 saugt über einen Saugschlauch Partikel an, wobei der Saugschlauch seinerseits mit einer elektrischen Hand-Werkzeugmaschine verbunden werden kann, um von dieser Hand-Werkzeugmaschine bei einer Werkstück-Bearbeitung, beispielsweise Sägen oder Bohren, erzeugten Staub bzw. Partikel abzusaugen. Die Hand-Werkzeugmaschine kann ebenso wie das Sauggerät durch einen Akku bzw. einen elektrischen Energiespeicher mit elektrischer Energie versorgt sein, so dass das System auch fern ab einer elektrischen Energieversorgung, beispielsweise einem 230V-Netz, betrieben werden kann.

Von Zeit zu Zeit müssen jedoch die Energiespeicher des Sauggeräts und der Hand-Werkzeugmaschine aufgeladen werden, d.h. zumindest ein Bauteil der gesamten Anordnung muss an ein Stromversorgungsnetz angeschlossen werden. Insbesondere bei einem Energiespeicher für die Hand-Werkzeugmaschine ist dies sehr unkomfortabel.

Es ist daher die Aufgabe der vorliegenden Erfindung, eine Verbesserung hinsichtlich der Aufladung eines elektrischen Energiespeichers, insbesondere eines Energiespeichermoduls für eine Hand-Werkzeugmaschine, bereitzustellen.

Zur Lösung der Aufgabe ist ein Sauggerät gemäß der technischen Lehre des Anspruchs 1 vorgesehen.

Es ist ein Grundgedanke der vorliegenden Erfindung, dass die Ladeeinrichtung quasi an Bord des Sauggerätes ist, so dass beispielsweise das bereits entladene Energiespeichermodul an dem Sauggerät aufgeladen werden kann, während die Hand-Werkzeugmaschine mit einem anderen Energiespeichermodul betrieben wird. Ein separates Ladegerät für die Hand-Werkzeugmaschine bzw. deren Energiespeichermodul ist nicht notwendig. Die Gefahr, dass ein Ladegerät beispielsweise vergessen wird, besteht nicht. Wenn das erfindungsgemäße Sauggerät genutzt wird, ist zugleich eine Ladeeinrichtung verfügbar, beispielsweise auf einer Baustelle.

Selbstverständlich ist der Begriff "Energiespeichermodul" so zu verstehen, dass der elektrische Energiespeicher auch einen festen Bestandteil der Hand-Werkzeugmaschine bilden kann. Zum Aufladen Ihres Energiespeichers muss dann eben die gesamte Hand-Werkzeugmaschine mit dem Sauggerät bzw. der Ladeeinrichtung verbunden werden. Bevorzugt ist jedoch eine lösbare Konfiguration, bei der das Energiespeichermodul von einem Gehäuse der Hand-Werkzeugmaschine entfernt werden kann, so dass ein entladenes Energiespeichermodul gegen ein frisch aufgeladenes Energiespeichermodul in an sich bekannter Weise ausgetauscht werden kann.

Das erfindungsgemäße Sauggerät ist zweckmäßigerweise ein mobiles Sauggerät. Das Sauggerät weist vorzugsweise Rollen zum Fahren auf einem Untergrund auf. Selbstverständlich könnte das Sauggerät auch ein tragbares Sauggerät sein, das Rollen aufweist oder auch keine Rollen hat. Das Sauggerät gemäß der Erfindung ist zweckmäßigerweise nicht als ein autarkes, in der Art eines Roboters arbeitendes Sauggerät ausgestaltet. Das Sauggerät kann vom Bediener mitgenommen und vor Ort eingesetzt werden. Weiterhin ist an das Sauggerät zweckmäßigerweise ein Saugschlauch anschließbar.

Die Ladekontakte können zwar beispielsweise mit einem flexiblen Kabel oder einem sonstigen elektrischen Leiter mit der sie versorgenden Elektrik des Sauggeräts verbunden sein. Das Kabel oder der Leiter bilden zweckmäßigerweise einen Bestandteil des Sauggeräts oder ist mit diesem verbunden. So wäre es zum Beispiel denkbar, das Energiespeichermodul zum Aufladen auf einer Oberseite des Saugergehäuses abzulegen und mit den elektrischen Ladekontakten zu verbinden.

Eine besonders bevorzugte Ausführungsform sieht jedoch vor, dass die Ladeeinrichtung eine Halterung zum Halten des elektrischen Energiespeichermoduls während des Ladevorgangs umfasst.

Die Halterung hat vorteilhaft Formschlusskonturen, die solchen entsprechen, die auch die Hand-Werkzeugmaschine hat, um das elektrische Energiespeichermoduls zu halten.

Die Halterung umfasst beispielsweise eine Steckaufnahme oder mehrere Steckaufnahmen und/oder Steckvorsprünge oder mehrere Steckvorsprünge, um eine Steckverbindung mit dem Energiespeichermodul herzustellen.

Bevorzugt sind bei der Halterung auch Rastmittel zum Verrasten des Energiespeichermoduls, z.B. mindestens eine Rastaufnahme und/oder ein mindestens ein Rastvorsprung.

Die Halterung ist zweckmäßigerweise an einer zur Bedienung des Sauggeräts vorgesehenen Bedienwand des Saugergehäuses angeordnet. Somit steht die Halterung beispielsweise dort zur Verfügung, wo auch sonst die Bedienung des Saugers geschieht. Es versteht sich, dass die Halterung auch an einer anderen Stelle, beispielsweise einer oberen Deckwand, einer Seitenwand oder dergleichen, des Saugergehäuses angeordnet sein kann.

Es ist beispielsweise eine Ausführungsform möglich, bei der die Halterung zum Halten des elektrischen Energiespeichermoduls während des Ladevorgangs an einer an sich zur Aufnahme eines Netzkabels vorgesehene Vertiefung oder Aufnahmemulde ist oder an dieser Vertiefung oder Aufnahmemulde angeordnet ist.

Die Ladeeinrichtung kann in einer Ausführungsform der Erfindung einen integralen Bestandteil des Sauggeräts bilden, wobei die elektrischen Ladekontakte an dem Saugergehäuse angeordnet sind. Dort befindet sich dann auch zweckmäßigerweise die Halterung.

Es versteht sich, dass die Ladeeinrichtung auch modular aufgebaut sein kann, d.h. dass sie beispielsweise als ein von dem Saugergehäuse separates, ein Ladergehäuse aufweisendes Lademodul ausgestaltet sein kann. Am Saugergehäuse wiederum ist eine Modulaufnahme für das Lademodul angeordnet. Die Modulaufnahme kann eine solche sein, die beispielsweise auch in DE 10 2009 015 642 A1 beschrieben ist.

In die Modulaufnahme kann alternativ auch ein Sauggerät-Kommunikationsmodul, das leitungslose Steuersignale empfangen kann und keine Einrichtung zum Laden eines Energiespeichermoduls für eine Hand-Werkzeugmaschine bildet, ein Radiomodul oder dergleichen eingesteckt werden.

Eine Ausführungsform der Erfindung kann zweckmäßigerweise vorsehen, dass die Ladeeinrichtung als Lademodul ausgestaltet ist und zugleich auch ein Sauggerät-Kommunikationsmodul bildet, das zum Schalten bzw. zum Ansteuern des Saugmotors (eine Leistungssteuerung des Saugmotors ist auch möglich) geeignet ist.

Die Ladeeinrichtung kann eine elektrische Schalteinrichtung zum Einschalten und Ausschalten und/oder zur Einstellung einer elektrischen Leistung des Saugmotors umfassen oder zur Ansteuerung einer derartigen Schalteinrichtung des Sauggeräts ausgestaltet sein.

Diese Schalteinrichtung kann beispielsweise einen Stromfluss messen, der zur Stromversorgung eines externen Geräts, beispielsweise einer Hand-Werkzeugmaschine, dient. Es ist aber auch möglich, dass die Schalteinrichtung beispielsweise einen elektrischen Schalter umfasst, mit dem der Saugmotor einschaltbar oder ausschaltbar ist oder mit dem eine elektrische Leistung des Saugmotors einstellbar ist.

Bevorzugt ist ein leitungsloses Kommunikationskonzept bei der Ladeeinrichtung, zum Beispiel der Schalteinrichtung, das heißt dass die Ladeeinrichtung eine Sauggerät-Kommunikationseinrichtung, z.B. einen Sauggerät-Empfänger, zum Empfang von durch eine Extern-Kommunikationseinrichtung gesendeten, leitungslosen Steuersignalen und/oder leitungslosen Meldesignalen aufweist. Die Ladeeinrichtung bildet dann beispielsweise eine Schalteinrichtung, die zur Ansteuerung des Saugmotors, insbesondere zum Einschalten und Ausschalten, anhand der leitungslosen Steuersignale ausgestaltet ist. Die leitungslos empfangenen Meldesignale kann die Ladeeinrichtung beispielsweise anhand von zweckmäßigerweise einen Bestandteil der Ladeeinrichtung bildenden Anzeigemitteln (optische und/oder akustische Anzeigemittel) anzeigen. Eine besonders bevorzugte Ausführungsform sieht vor, dass die Ladeeinrichtung die elektrische Aufladung des aufzuladende in Energiespeichermoduls anhand der Meldesignale steuert, insbesondere dann, wenn das oder die Meldesignale beispielsweise einen Ladezustand des extern betriebenen, gerade in Gebrauch befindlichen Energiespeichermoduls anzeigen. Die Extern-Kommunikationseinrichtung kann hierbei einen Bestandteil eines Systems bilden, das die erfindungsgemäße Ladeeinrichtung umfasst. Wenn also beispielsweise das gerade in Gebrauch befindliche Energiespeichermodul relativ schnell entladen wird, überträgt dies die Extern-Kommunikationseinrichtungen anhand des Meldesignals an die Ladeeinrichtung, welche ihrerseits dann beispielsweise den Ladevorgang des gerade aufzuladen den Energiespeichermoduls in Abhängigkeit von dem Meldesignal steuert, beispielsweise die elektrische Aufladung beschleunigt oder verlangsamt, wobei Letzteres beispielsweise das aufzuladende Energiespeichermodul schont.

Leitungslos ist so zu verstehen, dass zwischen den Kommunikationseinrichtungen keine elektrische oder optische Leitung notwendig ist. In anderer Formulierung könnte man auch drahtlos sagen. Leitungsgebunden kann dementsprechend auch als drahtgebunden verstanden werden, wenn zum Beispiel eine elektrische Drahtverbindung zwischen den Kommunikationseinrichtungen vorhanden ist. Auch ein optischer Leiter ist als Leitung möglich. Die mindestens eine Leitung zwischen den Kommunikationseinrichtungen kann an oder in einem Saugschlauch zwischen der Hand-Werkzeugmaschine und dem Sauggerät angeordnet sein.

Wie erwähnt, kann die Ladeeinrichtung bei dieser Ausführungsform als ein Sauggerät-Kommunikationsmodul und Lademodul ausgestaltet sein, das von dem Sauggerät bzw. dessen Saugergehäuse entfernbar ist. Es ist aber auch möglich, dass die Ladeeinrichtung bei dieser Ausführungsform ein integrales Bauteil des Sauggeräts bildet.

Bei den leitungslos übermittelten oder übermittelbaren Steuersignalen und/oder Meldesignalen handelt es sich beispielsweise um Funksignale oder optische Signale oder beides. Beispielsweise können die Kommunikationsmittel der Sauggerät-Kommunikationseinrichtung und der Extern-Kommunikationseinrichtung beispielsweise optische Kommunikationsmittel oder Funk-Kommunikationsmittel umfassen. Die Kommunikationsschnittstelle der Sauggerät-Kommunikationseinrichtung und/oder der Extern-Kommunikationseinrichtung können beispielsweise ein WLAN umfassen. So sind beispielsweise Infrarot-Signale möglich. Eine Sichtverbindung ist jedoch nicht notwendig, wenn die leitungslosen Meldesignale und/oder Steuersignale Funksignale sind oder umfassen. Es ist bevorzugt, wenn die Funksignale nur in einem Nahbereich von beispielsweise bis maximal 2-8 m vom Sauggerät empfangbar sind, so dass eine Störung durch andere Extern-Kommunikationseinrichtungen nicht zu befürchten ist. In der Regel reicht ein solcher Nahbereich auch aus, da das Sauggerät auch am Ort der Extern-Kommunikationseinrichtung benötigt wird, wo Staubpartikeln anfallen.

Eine vorteilhafte Ausführungsform der Erfindung sieht vor, dass das Lademodul oder das zum Aufladen des Energiespeichermoduls geeignete Sauggerät drahtlos mit dem Energiespeichermodul kommunizieren kann, beispielsweise um Steuerbefehle und/oder Meldungen vom Sauggerät zum Energiespeichermodul und somit zur Hand-Werkzeugmaschine oder umgekehrt von der Hand-Werkzeugmaschine zum Sauggerät zu übertragen. Somit ist es beispielsweise möglich, dass das Energiespeichermodul von dem Sauggerät einen Steuerbefehl erhält, die Hand-Werkzeugmaschine einzuschalten oder auszuschalten. Es ist auch möglich, Identifikationsdaten des Sauggeräts an die Hand-Werkzeugmaschine zu versenden oder dergleichen oder Identifikationsdaten der Hand-Werkzeugmaschine an das Sauggerät zu versenden.

Es ist möglich, dass die Hand-Werkzeugmaschine, die mit einem derartigen, eine Extern-Kommunikationseinrichtung aufweisenden Energiespeichermodul ausgestattet ist, das Sauggerät beispielsweise drahtlos einschaltet oder ausschaltet. Somit ist es möglich, eine konventionelle Handwerkzeugmaschine beispielsweise mit einem derartigen Energiespeichermodul für eine drahtlose Kommunikation mit dem Sauggerät sozusagen nachzurüsten. Auch ein konventionelles Sauggerät ist mit dem Lademodul nachzurüsten, das dann drahtlos mit dem Energiespeichermodul und somit der Hand-Werkzeugmaschine kommunizieren kann.

Das Energiespeichermodul kann beispielsweise einen Stromfluss beim Ein- oder Ausschalten der Hand-Werkzeugmaschine erfassen und somit einen Betrieb der Hand-Werkzeugmaschinen erkennen und drahtlos an das Lademodul bzw. das Sauggerät übertragen, dass die Hand-Werkzeugmaschine läuft oder ausgeschaltet ist. In Abhängigkeit von einem Betrieb der Hand-Werkzeugmaschinen und der vom Energiespeichermodul erhaltenen Information schaltet das Lademodul das Sauggerät beispielsweise ein oder aus, verändert dessen Leistung oder dergleichen.

Die Ladeeinrichtung kann in einer bevorzugten Ausführungsform der Erfindung einen Ladestrom zur Aufladung des Energiespeichermoduls in Abhängigkeit von den leitungslosen Steuersignalen schalten. So ist es beispielsweise möglich, dass die Ladeeinrichtung den Ladestrom bei einem Einschaltsignal für den Saugmotor einschaltet und bei einem Ausschaltsignal für den Saugmotor ausschaltet. Wenn dann beispielsweise das Sauggerät einen Stromsensor hat, der einen Stromfluss zur Ladeeinrichtung misst, erkennt das Sauggerät anhand der Signale des Stromsensors, ob ein Stromfluss vorhanden oder nicht. Der Stromfluss simuliert quasi eine Hand-Werkzeugmaschine, die beispielsweise an eine ansonsten vorhandene Steckdose des Sauggeräts angeschlossen ist.

Wenn die Ladeeinrichtung ein Lademodul bildet, das in eine Modulaufnahme des Sauggeräts eingesteckt werden kann, sind vorzugsweise proprietäre Modul-Kontakte bei dem Lademodul und der Modulaufnahme vorgesehen, das heißt nicht etwa Schutzkontakte üblicher Art, die bei Netzsteckern üblich sind, sondern Kontakte, die nur bei dem erfindungsgemäßen Sauggerät und dem erfindungsgemäßen Lademodul vorhanden sind, so dass eine Fehlbenutzung unmöglich ist.

Die Ladespannung (L) ist vorzugsweise eine Gleichspannung und/oder liegt zweckmäßigerweise in einem Bereich von 5-25 V

Die Ladeeinrichtung hat zweckmäßigerweise Stromanpassungsmittel und/oder Spannungsanpassungsmittel zur Bereitstellung der Ladespannung anhand einer Eingangsspannung, die beispielsweise von einer anderen elektrischen Komponente des Sauggeräts bereitgestellt wird, beispielsweise über ein Netzkabel aus einem 230 V-Netz einspeisbar ist, oder auch leistungselektronischen Komponenten, die bereits eine niedrigere Eingangsspannung für die Ladeeinrichtung und/oder eine Gleichspannung bereitstellen.

Die Stromanpassungsmittel und/oder Spannungsanpassungsmittel sorgen beispielsweise dafür, dass die Ladespannung eine Gleichspannung ist. Die Ladespannung liegt vorzugsweise im Bereich von 5-25 Volt, entsprechend einer typischen Ladespannung für einen elektrischen Energiespeicher für Hand-Werkzeugmaschinen. Es ist auch möglich, dass die Ladespannung beispielsweise 12 V beträgt, 15 Volt oder 18 V.

Es ist vorteilhaft, wenn die Ladeeinrichtung den Ladestrom und/oder den Ladezustand des Energiespeichermoduls anhand von Überwachungsmitteln überwacht, so dass das Energiespeichermodul in ausreichender Weise, jedoch nicht zu sehr, geladen wird.

Gemäß einer Variante der Erfindung weist das Sauggerät einen internen elektrischen Energiespeicher auf. Dabei kann es sich beispielsweise um einen Akkumulator, d.h. einen wiederaufladbaren, Energiespeicher handeln.

Es ist gemäß einer anderen Variante der Erfindung aber auch möglich, dass das Sauggerät beispielsweise eine Brennstoffzelle, Solarmodule oder dergleichen andere elektrische Energieerzeugungsmittel zur Bereitstellung elektrischer Energie für die Ladeeinrichtung hat.

Die Ladeeinrichtung ist zweckmäßigerweise über den internen elektrischen Energiespeicher mit elektrischer Energie zur Aufladung des Energiespeichermoduls bzw. der Hand-Werkzeugmaschine großzügig gestaltet. Somit kann also der beispielsweise eine große Kapazität aufweisende interne elektrische Energiespeicher dazu genutzt werden, den verhältnismäßig kleinen Energiespeicher des Energiespeichermoduls aufzuladen. Während das Sauggerät üblicherweise auf einem Untergrund abgestellt wird, so dass sein Gewicht keine wesentliche Rolle spielt, ist das Energiespeichermodul vorzugsweise leicht und kompakt, kann jedoch sozusagen die internen Kapazitäten des Sauggerätes nutzen.

Bevorzugt weist das Sauggerät eine Steuerungseinrichtung zur Steuerung einer elektrischen Aufladung des internen elektrischen Energiespeichers und des Energiespeichermoduls auf. Die Steuerungseinrichtung lädt beispielsweise bevorzugt den internen elektrischen Energiespeicher auf, wobei elektrische Leistungsobergrenzen beachtet werden. Somit wird beispielsweise verhindert, dass ein zu großer Netzstrom zur Stromversorgung des Sauggeräts bereitgestellt werden muss.

Die vorgenannte Steuerungseinrichtung oder eine andere Steuerungseinrichtung ist zweckmäßigerweise zur Steuerung einer elektrischen Aufladung des Energiespeichermoduls in Abhängigkeit von einem Betrieb des Saugmotors ausgestaltet. Wenn beispielsweise für den Saugmotor ein erhöhter Strombedarf oder überhaupt ein Strombedarf notwendig ist, kann die Steuerungseinrichtung den Ladestrom für das Aufladen des Energiespeichermoduls reduzieren. Wenn jedoch der Saugmotor nicht oder mit geringerer Leistungsaufnahme betrieben wird, wird der Ladevorgang mit optimaler Leistung fortgesetzt, so dass das Energiespeichermodul rasch aufgeladen wird.

Das Sauggerät gemäß der Erfindung ist zweckmäßigerweise nicht als ein autarkes, in der Art eines Roboters arbeitendes Sauggerät ausgestaltet. Das Sauggerät kann vom Bediener mitgenommen und vor Ort eingesetzt werden. Am Saugergehäuse sind zweckmäßigerweise Rollen zum Rollen auf einem Untergrund vorgesehen. Weiterhin ist an das Sauggerät zweckmäßigerweise ein Saugschlauch anschließbar. Das Sauggerät weist vorteilhaft einen Saugschlauch auf. An dem Saugergehäuse sind zweckmäßigerweise Rollen zum manuellen Verfahren auf einem Untergrund angeordnet.

Nachfolgend werden Ausführungsbeispiele der Erfindung anhand der Zeichnung erläutert. Es zeigen:
- Figur 1: eine perspektivische Ansicht eines Systems umfassend ein Sauggerät sowie eine mit einem elektrischen Energiespeichermodul versehene Hand-Werkzeugmaschine in Gestalt einer Säge, insbesondere einer Stichsäge,

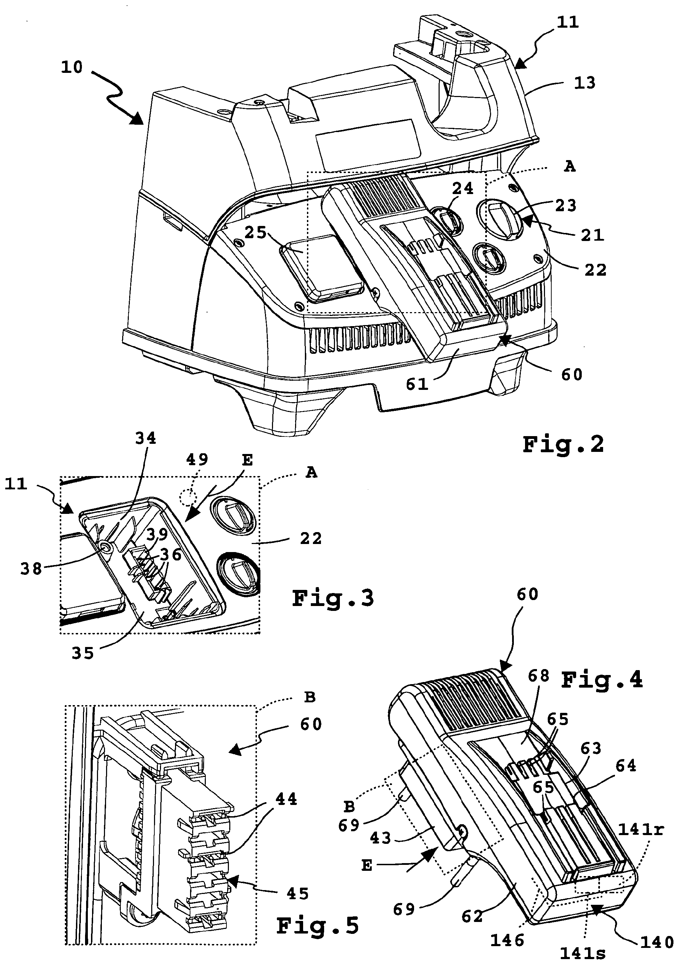

- Figur 2: eine perspektivische Schrägansicht auf einen oberen Teil eines Saugergehäuses des Sauggeräts gemäß Figur 1, das eine Ladeeinrichtung aufweist,
- Figur 3: das Saugergehäuse gemäß Figur 2, jedoch ohne Ladeeinrichtung, so dass eine Modulaufnahme sichtbar ist, etwa entsprechend einem Ausschnitt A in Figur 2,
- Figur 4: die Ladeeinrichtung gemäß Figur 2, jedoch von dem Sauggerät entfernt,
- Figur 5: Modul-Kontakte der Ladeeinrichtung gemäß Figur 4, etwa entsprechend einem Ausschnitt B in Figur 4,
- Figur 6: eine Ansicht etwa entsprechend der Ansicht gemäß Figur 2, jedoch mit einem am an der Ladeeinrichtung angeordneten Energiespeichermodul, das in
- Figur 7: von schräg oben dargestellt ist und in
- Figur 8: an einer Hand-Werkzeugmaschine in Gestalt eines Schraubgeräts oder Bohrgeräts montiert ist,

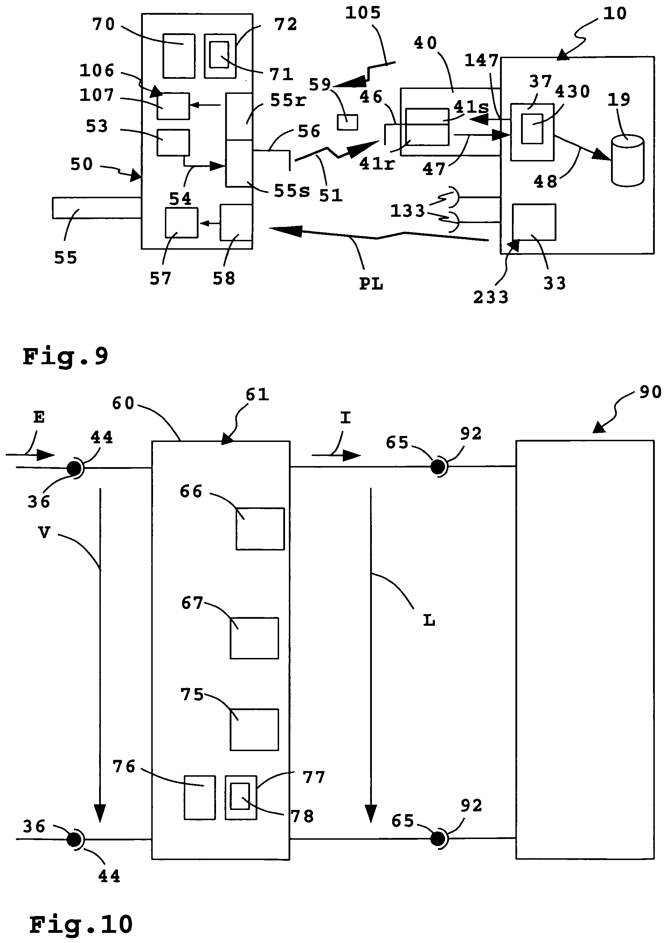

- Figur 9: ein elektrisches Schaltbild einer zur Verdeutlichung einer leitungslosen Ansteuerung des Sauggeräts gemäß Figur 1 und
- Figur 10: ein elektrisches Schaltbild zur Verdeutlichung eines Ladekonzepts zum Aufladen eines elektrischen Energiespeichermoduls mithilfe des Sauggeräts gemäß Figur 1, das entsprechend Figur 2 eine Ladeeinrichtung aufweist.

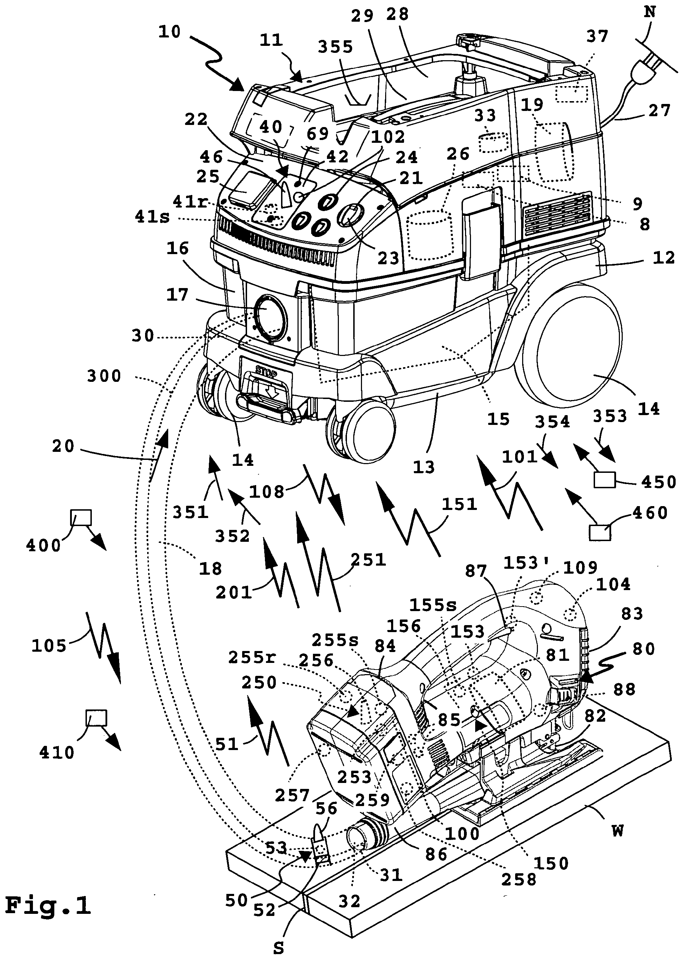

Ein Sauggerät 10 weist ein Saugergehäuse 11 auf. Das Saugergehäuse 11 umfasst ein Unterteil 12 sowie ein Oberteil 13, das lösbar mit dem Unterteil 12 verbindbar ist. An dem Saugergehäuse 11 sind Rollen 14 angeordnet, von denen die in Figur 1 vorderen Rollen 14 Lenkrollen sind. In dem Saugergehäuse 11 ist ein Staubsammelraum 15 vorgesehen, beispielsweise eine Aufnahmewanne. In dem Staubsammelraum 15 kann beispielsweise einen Filtersack angeordnet werden, wobei das Sauggerät 10 auch ohne Filtersack nutzbar sein kann. Der Staubsammelraum 15 ist in dem Unterteil 12 vorgesehen. An einer Vorderwand 16 des Saugergehäuses 11 ist ein Saugeinlass 17 vorgesehen, an den ein Saugschlauch 18 anschließbar ist. Der Saugeinlass 17 mündet in den Staubsammelraum 15.

Die elektrischen Komponenten des Sauggeräts 10 sind in dem Saugergehäuse 11 geschützt untergebracht. Bevorzugt sind die elektrischen Komponenten im Oberteil 13 angeordnet, beispielsweise ein Saugmotor 19, mit dem ein Saugstrom 20 erzeugbar ist. Der Saugmotor 19 umfasst beispielsweise eine nicht näher erläuterte die Ventilatoranordnung zur Erzeugung des Saugstroms 20 .

Das Sauggerät 10 kann in an sich bekannter Weise beispielsweise über Bedienelemente 21 bedient werden, die an einer oberhalb der Vorderwand 16 vorgesehenen Bedienwand 22 angeordnet sind. Dort befinden sich beispielsweise ein Hauptschalter 23 zum Einschalten oder Ausschalten des Saugmotors 19 oder ein Stellschalter 24 zur Einstellung einer Saugleistung des Sauggeräts 10 . Zudem ist noch eine Steckdose 25 vorgesehen, in die ein Netzkabel eines elektrischen Verbrauchers, beispielsweise einer nicht dargestellten Hand-Werkzeugmaschine, einsteckbar ist.

Das Sauggerät 10 kann über einen schematisch dargestellten internen Energiespeicher 26, beispielsweise eine Brennstoffzelle oder einen elektrischen Akkumulator, mit elektrischer Energie versorgt werden und/oder an ein elektrisches Stromversorgungsnetz N, beispielsweise 110 V bis 230 V Wechselspannung, angeschlossen werden, wofür ein Anschlusskabel 27 vorgesehen ist. Das Anschlusskabel 27 und der Saugschlauch 18 können bei Nichtgebrauch in eine Aufnahme 28 an einer Oberseite 29 des Saugergehäuses 11 eingelegt werden.

Der Saugschlauch 18 hat ein Gehäuseende 30, das als Steckende ausgestaltet ist und an oder in den Saugeinlass 17 in an sich bekannter Weise steckbar ist. Sein anderes Ende bildet einen Saugende 31 und weist eine Ansaugöffnung 32 auf, mit der beispielsweise ein starres Saugrohr, eine Bürste oder dergleichen verbindbar ist oder, was in Figur 1 dargestellt ist, beispielsweise eine Hand-Werkzeugmaschine 80. Die Hand-Werkzeugmaschine 80 ist beispielsweise eine Stichsäge, wobei alternativ auch andere Sägen, z.B. eine Kreissäge, oder Fräsen oder dergleichen möglich sind.

Die Hand-Werkzeugmaschine 80 ist zwar eine elektrische Maschine, das heißt sie hat einen elektrischen Antriebsmotor 81, wobei aber bezüglich des später noch erläutern leitungslosen Steuerungskonzeptes und/oder Meldekonzepts auch andere Antriebskonzepte einer Hand-Werkzeugmaschine mit beispielsweise einem pneumatischen Motor im Zusammenhang insbesondere mit einem Polierwerkzeug oder Schleifwerkzeug ohne weiteres möglich sind.

Der Antriebsmotor 81 treibt ein Werkzeug 82, beispielsweise ein Sägeblatt, an, mit dem ein Werkstück W bearbeitbar ist. Beispielsweise wird die Hand-Werkzeugmaschine 80 dazu verwendet, einen Sägeschnitt S in das Werkstück W einzuschneiden. Dabei entsteht Staub, der vom Sauggerät 10 abgesaugt wird.

Der Antriebsmotor 81 ist in einem Maschinengehäuse 83 der Hand-Werkzeugmaschine 80 angeordnet. An einem hinteren Bereich des Maschinengehäuses 83 befindet sich eine durch ein Energiespeichermodul 90 in der Zeichnung verdeckte Halterung 84 zum Halten des Energiespeichermoduls 90, wobei die Halterung 84 auch elektrische Kontakte 85 (schematisch angedeutet) zur elektrischen Verbindung des Energiespeichermoduls 90 mit den elektrischen Komponenten im Innern des Maschinengehäuses 83 befinden. Jedenfalls versorgt das Energiespeichermodul 90 die Hand-Werkzeugmaschine 80 mit elektrischer Energie, so dass diese ohne eine Verbindung mit einem elektrischen Stromversorgungsnetz, beispielsweise dem Stromversorgungsnetz N, frei betrieben werden kann.

Die Hand-Werkzeugmaschine 80 verfügt über einen Staub-Absauganschluss 86, beispielsweise einen Anschlussstutzen, der mit dem Saugende 31 des Saugschlauchs 18 verbindbar ist. Somit kann also das Sauggerät 10 den beim Betrieb der Hand-Werkzeugmaschine 80 anfallenden Staub direkt absaugen.

Die Bedienung und Nutzung der Hand-Werkzeugmaschine 80 ist in Zusammenwirkung mit dem Sauggerät 10 in mehrfacher Hinsicht erleichtert. Zum einen kann das Sauggerät 10 mittels eines leitungslosen Bedienkonzepts ohne eine Leitungsverbindung geschaltet werden, so dass beispielsweise der Saugmotor 19 läuft oder nicht läuft, wenn die Hand-Werkzeugmaschine 80 genutzt wird oder nicht. Zum anderen ermöglicht das Sauggerät 10 ein komfortables Aufladen des Energiespeichermoduls 90.

Zunächst wird die leitungslose Bedienung erläutert:
Beispielsweise ist an dem Saugende 31 des Saugschlauchs 18 eine Extern-Kommunikationseinrichtung 50 angeordnet, mit der leitungslose Steuersignale 51 zum Steuern des Sauggeräts 10, insbesondere zum Einschalten und Ausschalten des Saugmotors 19, erzeugbar sind. Die Extern-Kommunikationseinrichtung 50 ist beispielsweise mittels eines Klett-Bandes oder sonstigen Befestigungsmitteln 52 an dem Saugschlauch 18 befestigt. Es wäre auch möglich, dass der Saugschlauch 18 eine Tasche oder sonstige Aufnahme hat, in der die Extern-Kommunikationseinrichtung 50 angeordnet ist. Es ist auch möglich, dass die Extern-Kommunikationseinrichtung 50 mit dem Material, zum Beispiel Kunststoff, des Saugschlauchs 18 umspritzt ist.

Die Extern-Kommunikationseinrichtung 50 umfasst beispielsweise einen Bewegungssensor 53, der auf Bewegungen des Saugschlauchs 18 reagiert. Wenn also der Saugschlauch 18 im Bereich seines Saugendes 31 bewegt wird, beispielsweise beim Betrieb der Hand-Werkzeugmaschine 80 vibriert, erzeugt der Bewegungssensor 53 ein Sensorsignal 54. Anhand des Sensorsignals 54 erzeugt ein Extern-Sender 55s das Steuersignal 51, vorliegend ein Funksignal, das die Extern-Kommunikationseinrichtung 50 über eine Antenne 56 versendet.

Die Extern-Kommunikationseinrichtung 50 hat zweckmäßigerweise einen lokalen Energiespeicher 57, zum Beispiel eine Batterie und/oder einen Speicherkondensator, und/oder einen Generator 58 zur Erzeugung elektrischer Energie. Der Generator 58 kann beispielsweise ein Generator sein, der mittels einer insbesondere induktiv arbeitenden Ladeeinrichtung 33, die am oder im Saugergehäuse 11 angeordnet ist, leitungslos aufgeladen werden kann, was durch einen Pfeil PL angedeutet ist. Ferner kann der Generator 58 auch beispielsweise durch Bewegungen betätigbar sein. Jedenfalls ist es bevorzugt, wenn zwischen dem Saugergehäuse 11 und der Extern-Kommunikationseinrichtung 50 keine Leitungsverbindung notwendig ist, wobei beispielsweise eine Leitungsverbindung zur elektrischen Stromversorgung im Prinzip auch möglich ist. So können beispielsweise alternativ oder in Ergänzung zur Ladeeinrichtung 33 elektrische Ladekontakte 133 zum Aufladen einer erfindungsgemäßen Extern-Kommunikationseinrichtung vorgesehen sein. Die Ladeeinrichtung 33 und die Ladekontakte 133 bilden Lademittel 233. Z.B. ist an der Oberseite 29 des Saugergehäuses 11 eine schematisch dargestellte Ladebucht oder Ladeaufnahme 355 mit den Ladekontakten 133 und/oder der Ladeeinrichtung 33 vorgesehen.

Das Sauggerät 10 weist eine elektrische Sauggerät-Kommunikationseinrichtung 40 mit einem Sauggerät-Empfänger 41r zum Empfang der durch die Extern-Kommunikationseinrichtung 50 gesendeten Steuersignalen 51 auf. Die Sauggerät-Kommunikationseinrichtung 40 umfasst beispielsweise ein Sauggerät-Kommunikationsmodul 42, das in einer Modulaufnahme 34 am Saugergehäuse 11 aufgenommen ist.

Der Sauggerät-Empfänger 41r empfängt die Steuersignale 51 z.B. über eine Antenne 46. Die Antenne 46 kann z.B. vor ein Gehäuse des Sauggerät-Kommunikationsmoduls 42 vorstehen, in dieses integriert sein oder dergleichen.

Die Modulaufnahme 34 weist beispielsweise eine Steckaufnahme 35 auf, in die ein im Zusammenhang mit einem Lademodul 60 näher beschriebener Steckvorsprung 43 eingesteckt werden kann.

An dem Steckvorsprung 43 sind beispielsweise elektrische Modul-Kontakte 44 vorgesehen, die in elektrische Verbindung mit Modul-Kontakten 36 der Modulaufnahme 34 gelangen können. Die Modul-Kontakte 44 sind z.B. an einem vorzugsweise in Gestalt eines Steckvorsprungs ausgestalteten Kontaktträger 45 vorgesehen, der zum Einstecken in eine Steckaufnahme 39 der Modulaufnahme 34 vorgesehen ist. Die Modul-Kontakte 36, 44 sind zweckmäßigerweise proprietäre Kontakte, das heißt nicht etwa Schutzkontakte wie sie der beispielsweise der am Anschlusskabel 27 angeordnete Stecker aufweist. Die Modul-Kontakte 36, 44 denen zur Übertragung elektrischer Energie und/oder zur Übermittlung von Steuersignalen und/oder Meldesignalen.

Die Modulaufnahme 34 hat beispielsweise eine im wesentlichen rechteckige Querschnittskontur und ist als eine Vertiefung ausgestaltet.

Das Sauggerät-Kommunikationsmodul 42 sendet beispielsweise über seine Modul-Kontakte 44 Schaltsignale 47 an eine Steuereinrichtung 37, die ihrerseits wiederum den Saugmotor 19 steuert, z.B. über geeignete Leistungsschalter, Halbleiter oder dergleichen. Wenn also der Sauggerät-Empfänger 41r von der Extern-Kommunikationseinrichtung 50 ein Steuersignal 51 erhält, das zum Einschalten des Saugmotors 19 dient, steuert das Sauggerät-Kommunikationsmodul 42 die Steuereinrichtung 37 entsprechend an, welche ihrerseits wiederum den Saugmotor 19 einschaltet, ausschaltet oder auch dessen Leistung einstellt, zum Beispiel dessen Drehzahl reduziert oder erhöht, was durch einen Pfeil 48 angedeutet ist.

Es versteht sich, dass derartige Stellmittel, Schalter oder dergleichen, auch direkt an Bord des Sauggerät-Kommunikationsmoduls 42 sein können, so dass die Zwischenschaltung der Steuereinrichtung 37 nicht notwendig ist.

Weiterhin kann eine Variante der Erfindung vorsehen, dass die Steuereinrichtung eines Sauggeräts integral eine leitungslose Schnittstelle, so dass ein separates Sauggerät-Kommunikationsmodul, wie beispielsweise das Sauggerät-Kommunikationsmodul 42, nicht notwendig ist. Beispielsweise könnte der Sauggerät-Empfänger 41r einen Bestandteil der Steuereinrichtung 37 bilden.

Es versteht sich, dass da obengenannte modulare Konzept vorteilhaft ist, es aber auch möglich ist, dass die Sauggerät-Kommunikationseinrichtung 40 z.B. einen festen Bestandteil des Sauggeräts 10 bildet. Die Sauggerät-Kommunikationseinrichtung 40 kann z.B. einen Bestandteil der Steuereinrichtung 37 bilden.

Anstelle oder in Ergänzung der Modul-Kontakte 36, 44 könnte auch eine leitungslose Schnittstelle (Funkschnittstelle oder optische Schnittstelle) zwischen der Sauggerät-Kommunikationseinrichtung 40 und der Steuereinrichtung 37 vorgesehen sein. Bevorzugt ist jedenfalls eine potenzialfreie Kopplung zwischen der Sauggerät-Kommunikationseinrichtung 40 und den übrigen elektrischen Komponenten des Sauggeräts 10, was man beispielsweise auch mittels Optokopplern erreichen kann.

Ein anderes Konzept sieht vor, dass beispielsweise an Bord der Hand-Werkzeugmaschine 80 eine Extern-Kommunikationseinrichtung 150 oder an Bord des Energiespeichermoduls 90 eine Extern-Kommunikationseinrichtung 250 angeordnet sind, die mit der Sauggerät-Kommunikationseinrichtung 40 leitungslos kommunizieren können.

Die Extern-Kommunikationseinrichtungen 150 und 250 können integrale Bestandteile des Energiespeichermoduls 90 bzw. der Hand-Werkzeugmaschine 80 sein. Es ist aber auch ein modulares Konzept möglich, das heißt dass beispielsweise an der Hand-Werkzeugmaschine 80 und/oder am Energiespeichermodul 90 eine Modulaufnahme vorhanden ist, in denen die entsprechend modular, beispielsweise als Steckteile ausgestalteten Extern-Kommunikationseinrichtungen 150 oder 250 angeordnet werden können. Ferner können die Extern-Kommunikationseinrichtungen 150 und/oder 250 auch mittels Befestigungsmitteln, zum Beispiel Klebemitteln, Rastverbindungsmitteln oder dergleichen, nachträglich am Energiespeichermodul 90 oder der Hand-Werkzeugmaschine 80 angeordnet werden. Somit ist eine Nachrüstung möglich.

Die Extern-Kommunikationseinrichtung 150 umfasst beispielsweise einen Drehzahlsensor 153, der eine jeweilige Drehzahl des Antriebsmotors 81 erfasst. Wenn also der Antriebsmotor 81 und somit die Hand-Werkzeugmaschine 80 betrieben wird, steuert der Drehzahlsensor 153 einen Extern-Sender 155s, der beispielsweise ein Bluetooth-Sender umfasst, zum Senden von Steuersignalen 151 über eine Antenne 156, die beispielsweise in das Maschinengehäuse 83 integriert ist, an, worauf die Sauggerät-Kommunikationseinrichtung 40 den Saugmotor 19 einschaltet oder ein Einschaltsignal an die Steuereinrichtung 37 sendet. Wenn die Drehzahl des Antriebsmotors 81 steigt, das Werkzeug 82 also noch mehr Staub bei der Bearbeitung des Werkstücks W erzeugt, kann die Extern-Kommunikationseinrichtung 150 die Sauggerät-Kommunikationseinrichtung 40 zu einer erhöhten Drehzahl des Saugmotors 19 ansteuern. Wenn die Hand-Werkzeugmaschine 80 abgeschaltet wird, steuert die Extern-Kommunikationseinrichtung 150 zum Abschalten des Saugmotors 19 an.

Anstelle oder in Ergänzung des Drehzahlsensors 153 könnte beispielsweise auch ein magnetischer Sensor, ein Hall-Sensor oder dergleichen vorgesehen sein. Selbstverständlich kann auch an Bord der Hand-Werkzeugmaschine 80 ein Stromsensor vorgesehen sein, der den Stromfluss zum Antriebsmotor 81 oder einer nicht dargestellten Arbeitsfeldbeleuchtung der Hand-Werkzeugmaschine 80, die beim Betrieb derselben leuchtet, erfasst und die Extern-Kommunikationseinrichtung 150 dementsprechend ein Steuersignal 151 zur Ansteuerung der Sauggerät-Kommunikationseinrichtung 40 erzeugt. Anstelle oder in Ergänzung des Stromsensors kann auch ein Spannungssensor vorgesehen sein, der eine am Antriebsmotor 81 oder der Arbeitsfeldbeleuchtung anliegende Versorgungsspannung misst.

Eine schematisch angedeutete Ausführungsform sieht vor, dass an einem Schalter 87, der zum Einschalten und Ausschalten des Antriebsmotors 81 der Hand-Werkzeugmaschine 80 dient, beispielsweise ein Positionssensor und/oder ein magnetischer Sensor und/oder ein elektrischer Schaltkontakt oder dergleichen anderer Sensor 153' angeordnet ist, der die Position des Schalters 87 erfasst oder in Abhängigkeit von dessen Position betätigbar ist, so dass die Extern-Kommunikationseinrichtung 150 in Abhängigkeit von einer Position des Schalters 87 die Steuersignale 51 erzeugt und somit den Saugmotor 19 mithilfe der Sauggerät-Kommunikationseinrichtung 40 einschaltet und/oder ausschaltet und/oder dessen Leistung einstellt.

In diesem Zusammenhang sei noch auf ein redundantes Erfassungskonzept hingewiesen, das heißt dass eine erfindungsgemäße Extern-Kommunikationseinrichtung selbstverständlich auch mehrere Sensoren, Schaltkontakte und dergleichen aufweisen kann, so dass sie das Steuersignal in Abhängigkeit von mindestens zwei Sensorsignalen bzw. Signalen von Schaltkontakten erzeugt. Beispielsweise wertet die Extern-Kommunikationseinrichtung 150 die Sensorsignale der Sensoren 153 und 153' aus und sendet nur dann das Steuersignal 51 zum Einschalten des Saugmotors 19, wenn beide Sensoren 153 und 153' melden, dass der Antriebsmotor 81 der Hand-Werkzeugmaschine 80 läuft.

Es ist vorteilhaft, wenn das Sauggerät 10 noch um eine feste oder vorzugsweise parametrierbare Nachlaufzeit nachläuft, d.h. der Saugmotor 19 erst nach einer gewissen Zeit, wenn die Hand-Werkzeugmaschine 80 bereits abgeschaltet ist, ebenfalls abgeschaltet wird. Somit kann noch im Saugschlauch 18 befindlicher Staub oder auch in der Umgebung um das Werkzeug 82 befindlicher Staub abgesaugt werden, auch wenn die Hand-Werkzeugmaschine 80 bereits abgeschaltet ist.

Auch ein sofortiges Einschalten des Saugmotors 19, wenn das Steuersignal 51 ein Einschalten angibt, ist nicht immer vorteilhaft. Beispielsweise kann eine Fehlbedienung vorliegen oder die Hand-Werkzeugmaschine noch nicht in Eingriff mit dem Werkstück W sein. Dementsprechend kann es vorteilhaft sein, wenn bei der Sauggerät-Kommunikationseinrichtung 40 auch eine Einschalt-Verzögerungszeit fest eingestellt oder parametrierbar ist, so dass diese den Saugmotor 19 erst nach Ablauf der Einschalt-Verzögerungszeit einschaltet, wenn sie durch das Steuersignal 51 zum Einschalten des Saugmotors 19 angesteuert worden ist.

Die Extern-Kommunikationseinrichtung 250 bildet einen Bestandteil des Energiespeichermoduls 90 und umfasst einen Stromsensor 253, der einen Stromfluss vom Energiespeichermodul 90 zu der Hand-Werkzeugmaschine 80, insbesondere deren Antriebsmotor 81, umfasst. Wenn der Stromsensor 253 einen Stromfluss feststellt, erzeugt ein Extern-Sender 255s ein entsprechendes Steuersignal 251 zur Ansteuerung der Sauggerät-Kommunikationseinrichtung 40, so dass diese den Saugmotor 19 einschaltet. Wenn die Hand-Werkzeugmaschine 80 abgeschaltet wird, sendet die Extern-Kommunikationseinrichtung 250 ein entsprechendes Abschalt-Steuersignal 251, worauf die Sauggerät-Kommunikationseinrichtung 40 den Saugmotor 19 abschaltet.

Die Extern-Kommunikationseinrichtung 250 ist in einem Energiespeichergehäuse des Energiespeichermoduls 90 angeordnet. Selbstverständlich wäre es auch möglich, sozusagen ein Zwischenmodul 100 vorzusehen, das zwischen Anschlusskontakte 92 des Energiespeichermoduls 90 und die Kontakte 85 der Hand-Werkzeugmaschine 80 geschaltet ist, um den Stromfluss vom Energiespeichermodul 90 zur Hand-Werkzeugmaschine 80 bzw. der Antriebsmotor 81 zu erfassen und ein entsprechendes Steuersignal 251 zu erzeugen. Das Zwischenmodul 100 ist angedeutet.

Eine bevorzugte Ausführungsform sieht vor, dass eine Sauggerät-Kommunikationseinrichtung und eine Extern-Kommunikationseinrichtung, die leitungslos miteinander kommunizieren, im Rahmen eines Lernprozesses, z.B. einer so genannten Teach-Funktion, quasi kennen lernen. Somit kann zum Beispiel einem Missbrauch oder eine Fehlbedienung vorgebeugt werden. Beispielsweise sendet die Extern-Kommunikationseinrichtung 50 im Rahmen einer Startprozedur zunächst eine Kommunikationskennung 59 an den Sauggerät-Empfänger 41r, der seinerseits wiederum anhand zum Beispiel einer Vergleichsliste überprüft, ob die Kommunikationskennung 59 die Extern-Kommunikationseinrichtung 50 zum Senden der Steuersignale 51 berechtigt. Wenn also beispielsweise mehrere Handwerker auf einer Baustelle arbeiten und mit ihren Hand-Werkzeugen gemäß der Erfindung Sauggeräte leitungslos einschalten und ausschalten, kann somit verhindert werden, dass es zu Störungen kommt.

Es ist auch möglich, dass die Sauggerät-Kommunikationseinrichtung 40 beispielsweise durch Drücken eines in der Zeichnung nicht dargestellten elektrischen Kontaktes der Sauggerät-Kommunikationseinrichtung 40 zum Empfang der Kommunikationskennung 59 bereit ist, somit also die Extern-Kommunikationseinrichtung 50, 150, 250 als eine berechtigte Extern-Kommunikationseinrichtung erkennt und anschließend von ihr dann die Steuersignale 51, 151, 251 akzeptiert.

Auch das Lademodul 60 kann eine erfindungsgemäße Sauggerät-Kommunikationseinrichtung aufweisen oder bilden, beispielsweise eine Sauggerät-Kommunikationseinrichtung 140.

Bislang wurde die Kommunikationsrichtung von der Extern-Kommunikationseinrichtung 50, 150, 250 zur Sauggerät-Kommunikationseinrichtungen 40, 140 im Sinne einer Steuerung beschrieben des Sauggeräts 10 durch die Extern-Kommunikationseinrichtung 50, 150, 250.

In der Kommunikationsrichtung von der Hand-Werkzeugmaschine zum Sauggerät können selbstverständlich auch Meldungen erfolgen, so dass beispielsweise ein Betriebszustand der Hand-Werkzeugmaschine 80 an Bord des Sauggeräts 10 angezeigt werden können. Beispielsweise kann die Extern-Kommunikationseinrichtung 150 eine Funktionsstörung der Hand-Werkzeugmaschine 80 im Rahmen mittels eines Extern-Senders 155s als ein Meldesignal 101 an die Sauggerät-Kommunikationseinrichtung 40 senden, welche ihrerseits dann das Meldesignal 101 über einen Sauggerät-Empfänger 41r empfängt und beispielsweise eine optische Anzeige 102, zum Beispiel eine LED, zur Anzeige des Meldesignals 101 ansteuert.

Auch zwischen der Extern-Kommunikationseinrichtung 250, die beispielsweise an Bord des Energiespeichermoduls 90 ist, und dem Lademodul 60, das die Sauggerät-Kommunikationseinrichtung 140 umfasst, ist eine leitungslose Kommunikation zweckmäßig. So kann beispielsweise die Extern-Kommunikationseinrichtung 250 mittels eines Extern-Senders 255s an das Lademodul 60, also die Ladeeinrichtung 61, mittels eines Meldesignals 201 den Ladezustand des Energiespeichermoduls 90 melden. Die Sauggerät-Kommunikationseinrichtung 140 empfängt das Meldesignal über einen Sauggerät-Empfänger 141r. Beispielsweise kann eine optische und/oder akustische Anzeige 103 an Bord der Ladeeinrichtung 61 vorgesehen sein, die den Ladezustand des externen, an der Hand-Werkzeugmaschine 80 betriebenen Energiespeichermoduls 90 anzeigt.

Ferner ist es möglich, dass beispielsweise die Ladeeinrichtung 61 die Aufladung des aktuell aufzuladenden Energiespeichermoduls 90 in Abhängigkeit von dem Meldesignal 201 steuert, beispielsweise die elektrische Aufladung dieses aufzuladenden Energiespeichermoduls 90 beschleunigt, wenn das an der Hand-Werkzeugmaschine 80 betriebene Energiespeichermodul 90 schnell einen Ladung verliert, also bald ausgetauscht werden muss. Die Extern-Kommunikationseinrichtung 250 umfasst beispielsweise eine Messeinrichtung 257 zur Erfassung des Ladezustand des Energiespeichermoduls 90 und zur Erzeugung des den Ladezustand meldenden Meldesignals 201.

Selbstverständlich ist das vorgenannte leitungslose Konzept auch in umgekehrter Richtung anwendbar, das heißt dass die Sauggerät-Kommunikationseinrichtungen 40, 140 Nachrichten oder Signale an die Extern-Kommunikationseinrichtungen 50, 150, 250 senden.

An Bord der Sauggerät-Kommunikationseinrichtungen 40 und/oder der Sauggerät-Kommunikationseinrichtungen 140 sind beispielsweise Sauggerät-Sender 41s und 141s vorgesehen, die zum Senden von Steuersignalen und/oder Meldesignalen an die Extern-Kommunikationseinrichtungen 50, 150, 250 ausgestaltet sind.

Wenn beispielsweise die Steuereinrichtung 37 des Sauggeräts 10 der Sauggerät-Kommunikationseinrichtung 40 mittels eines internen Signals 147 signalisiert, dass der Staubsammelraum 15 nahezu gefüllt ist, also keine weiteren Partikel mehr aufnehmen kann, kann der Sauggerät-Sender 41s ein Meldesignal 105 an die Extern-Kommunikationseinrichtung 50 senden, welche an optischen oder akustischen Ausgabemitteln 106, die z. B. eine LED umfassen, den Inhalt des Meldesignals 105 ausgibt. Der Bediener kann anhand dieser direkt vor Ort, bei der Hand-Werkzeugmaschine 80 erfolgenden Signalausgabe erkennen, dass er beispielsweise den Sammelbehälter des Sauggeräts 10 entleeren muss.

Die Steuereinrichtung 37 kann also ein Meldesignal 105 oder eine Nachricht mithilfe der Sauggerät-Kommunikationseinrichtung 40 generieren, das diese über den Sauggerät-Sender 41s an eine oder mehrere der Extern-Kommunikationseinrichtungen 50, 150 oder 250 sendet. Das Meldesignal 105, das wie angedeutet auch eine komplexere, mehrere Informationen enthaltende Nachricht sein kann oder auch mehrere voneinander separate Nachrichten umfassen kann, enthält beispielsweise eine Information über die Größe des Saugstroms 20 und/oder eine Saugleistung des Saugmotors 19 und/oder eine Information über einen Füllstand des Staubsammelraums 15.

Die Extern-Kommunikationseinrichtungen 50, 150 oder 250 können eine oder mehrere Informationen des Meldesignals 105 beispielsweise an Ausgabemitteln 106 ausgeben, die beispielsweise eine Leuchtanzeige, zum Beispiel LEDs, und/oder ein Display und/oder einen Lautsprecher oder andere akustische Ausgabemittel umfassen. Wenn also beispielsweise das Meldesignal 105 signalisiert, dass demnächst der Staubsammelraum 15 und/oder ein darin angeordneter, in der Zeichnung nicht dargestellter Filter, vollständig gefüllt und verschmutzt ist, kann beispielsweise eine als Warn-LED ausgestaltete Leuchtanzeige 107 der Extern-Kommunikationseinrichtung 50 dieses anzeigen.

Die an Bord des Energiespeichermoduls 90 oder des Zwischenmodul 100 oder der Hand-Werkzeugmaschine 80 angeordnete Extern-Kommunikationseinrichtung 150 oder 250 kann darüber hinaus beispielsweise auch eine haptische Anzeige, eine Vibrationsanzeige oder dergleichen umfassen, um das Meldesignal 105 auszugeben. Beispielsweise kann als ein Ausgabemittel an Bord der Hand-Werkzeugmaschine 80 eine optische und/oder akustische Anzeige 104 und/oder ein Vibrationselement 109 vorgesehen sein, das bei einem kritischen Füllstand im Staubsammelraum 15 und/oder bei einer geringeren Saugleistung des Sauggeräts 10, die im Rahmen des Meldesignals 105 signalisiert wird, vibriert und so dem Bediener anzeigt, dass er sich um das Sauggerät 10 kümmern sollte, damit die von ihm gewünschte Saugleistung zur Verfügung steht.

Eine noch weiter gehende Funktion stellt es dar, wenn das Sauggerät 10 und/oder die Sauggerät-Kommunikationseinrichtungen 40 oder 140 mithilfe eines Steuersignals 108 direkt Einfluss auf die Funktion der Hand-Werkzeugmaschine 80 nimmt. Beispielsweise kann die Steuereinrichtung 37 bei einem Ausfall des Sauggeräts 10 oder einer entsprechend kritischen, geringeren Saugleistung des Sauggeräts 10, eine Information 147 an die Sauggerät-Kommunikationseinrichtungen 40 oder 140 senden, die daraus entsprechende das Steuersignal 108 erzeugt und an die Extern-Kommunikationseinrichtungen 50, 150, 250 sendet. Die Extern-Kommunikationseinrichtungen 150 oder 250 können dann direkt Einfluss auf den Betrieb der Hand-Werkzeugmaschine 80 nehmen. Wenn beispielsweise die Saugleistung des Sauggeräts 10 nicht oder nur in einem verringerten Umfang zur Verfügung steht, kann das Steuersignal 108 dazu instruieren, die Leistung des Antriebsmotors 81 zu reduzieren oder diesen sogar ganz ab zu schalten. Dadurch kann beispielsweise vermieden werden, das der Nutzer durch umher wirbelnde Partikel gesundheitlichen Schaden nimmt, wenn das Sauggerät 10 die von der Hand-Werkzeugmaschine 80 erzeugten Partikeln nicht mehr ausreichend absaugen kann.

Die an Bord des Energiespeichermoduls 90 befindliche Extern-Kommunikationseinrichtung 250 kann beispielsweise den Stromfluss zur Hand-Werkzeugmaschine 80 mittels einer Schalteinrichtung 258 ab- und anschalten, z.B. nach Ansteuerung durch das Steuersignal 108.

Ferner kann die Extern-Kommunikationseinrichtung 250 z.B. eine drahtgebundene oder vorzugsweise drahtlose Schnittstelle 259, z.B. eine Funkschnittstelle, zur Kommunikation mit der Hand-Werkzeugmaschine 80, insbesondere deren Steuerung 88, aufweisen, z.B. um das Steuersignal 108 weiterzuleiten und/oder die Betriebsparameter 450, 400 und/oder die Identifikationskennungen 410, 460 zu kommunizieren. Eine drahtgebundene Schnittstelle 259 kann z.B. vorsehen, dass Daten über die Versorgungsleitungen zur Hand-Werkzeugmaschine 80 digital übertragen und/oder aufmoduliert werden.

Die Extern-Kommunikationseinrichtung 150 ist direkt an die Steuerung, zum Beispiel eine Bordelektronik, der Hand-Werkzeugmaschine 80 angeschlossen oder bildet einen Teil derselben, so dass diese auf diesem Wege direkt Einfluss auf den Betrieb des Antriebsmotors 81 nehmen kann, diesen also beispielsweise abschalten kann. Selbstverständlich ist es vorteilhaft, wenn zuvor noch eine Warnung erfolgt, so dass der Bediener nicht durch die vorgenannte Zwangsabschaltung überrascht wird.

Es ist vorteilhaft, wenn die Sauggerät-Kommunikationseinrichtungen 40, 140 und/oder die Extern-Kommunikationseinrichtungen 50, 150, 250 beispielsweise einen Mikroprozessor aufweisen und/oder zur Ausführung von Softwaremodulen geeignet sind, mit denen die oben erläuterten oder nachfolgend erläuterten Funktionen realisierbar sind. Beispielsweise hat die Extern-Kommunikationseinrichtung 50 einen Mikroprozessor 70, der mittels eines Programmmoduls 71 die Sensorsignale 54 auswertet und beispielsweise den Extern-Sender 55s und/oder den Extern-Empfänger 55r ansteuert oder realisiert. Das Programmmodul 71 ist ebenso wie die Kommunikationskennung 59 zweckmäßigerweise in einem Speicher 72 gespeichert.

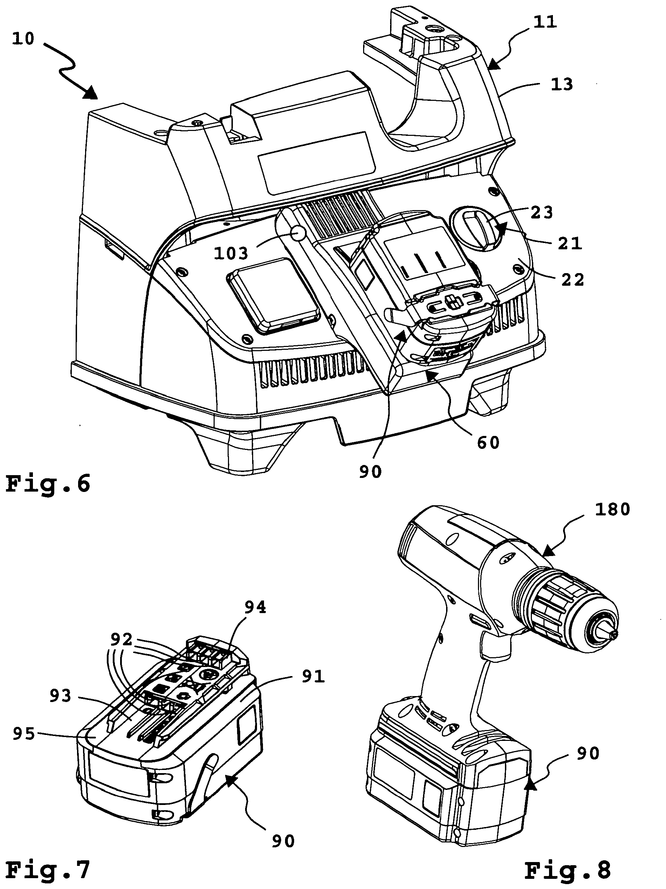

In einer Funktion ist das Lademodul 60 zum Aufladen des Energiespeichermoduls 90 oder anderen, in der Zeichnung nicht dargestellten Energiespeichermodulen für Hand-Werkzeugmaschinen, beispielsweise der Hand-Werkzeugmaschine 80 oder einer in Figur 8 dargestellten Hand-Werkzeugmaschine 180 in Gestalt eines Akku-Schraubers oder Bohrers, vorgesehen. Das Lademodul 60 bildet eine Ladeeinrichtung 61 zum Aufladen des elektrischen Energiespeichermoduls 90.

Das Lademodul 60 hat an seinem Ladergehäuse 62 eine Halterung 63 zum Halten des Energiespeichermoduls 90 . Die Halterung 63 umfasst beispielsweise einen Steckvorsprung 64, der in eine Steckaufnahme 93 des Energiespeichergehäuses 91 bzw. des Energiespeichermoduls 90 einsteckbar ist.

Die Halterung 63 umfasst auch eine Steckaufnahme oder Halteaufnahme 68, in die ein Steckvorsprung 94 an einer Oberseite 95 des Energiespeichergehäuses 91 eingreifen kann. Die Halterung 63 entspricht der Halterung 84 der Hand-Werkzeugmaschine 80 oder 180, d.h. sie ist zur formschlüssigen Aufnahme des Energiespeichergehäuses 91 ausgestaltet.

Im Bereich des Steckvorsprungs 64 sind elektrische Ladekontakte 65 zur Bereitstellung einer Ladespannung L für das elektrische Energiespeichermodul 90 vorgesehen.

Die Ladespannung L ist beispielsweise eine Gleichspannung in einem Bereich von 5 V bis 25 V. In diesem Zusammenhang ist es vorteilhaft, wenn das Lademodul 60 Erkennungsmittel 66 aufweist, um den jeweiligen Typ des Energiespeichermoduls 90 zu erkennen und dementsprechend die Ladespannung L einzustellen. Wenn also beispielsweise ein 12 V-Energiespeichermodul angeschlossen wird, wird die Ladespannung L entsprechend niedriger eingestellt, während bei einem Energiespeichermodul mit einer Nennspannung von 18 V eine entsprechend höhere Ladespannung L eingesteckt wird. Die Erkennungsmittel 66 umfassen beispielsweise elektrische Mittel, optische Mittel oder dergleichen. Es ist auch möglich, dass die Erkennungsmittel 66 beispielsweise eine Bus-Schnittstelle umfassen, um mit einem Buskoppler an Bord des Energiespeichermoduls 90 zu kommunizieren und so Daten des Energiespeichermoduls 90, beispielsweise dessen Ladezustand, Nennspannung oder dergleichen, zu erfassen.

Mithilfe von elektrischen Anpassungsmitteln 67, die beispielsweise einen elektrischen Transformator und/oder einen Gleichrichter oder dergleichen umfassen, kann die Ladeeinrichtung 61 eine beispielsweise vom Versorgungsnetz N bereitgestellte Versorgungsspannung V zu der Ladespannung L umwandeln.

Ferner sind vorteilhaft Überwachungsmittel 75 zur Überwachung der Ladespannung L und/oder zur Überwachung eines Ladezustand des Energiespeichermoduls 90 vorgesehen, so dass dieses optimal aufgeladen wird.

Die Überwachungsmittel 75 und/oder Erkennungsmittel 66 und/oder die Anpassungsmittel 67 umfassen beispielsweise einen Mikroprozessor 76, der Programmcode von Softwaremodulen ausführt, beispielsweise eines in einem Speicher 77 gespeicherten Softwaremoduls 78. Eine Realisierung der Überwachungsmittel 75 und/oder der Erkennungsmittel 66 und/oder der Anpassungsmittel 67 in Hardware ist ohne weiteres möglich.

Das Ladergehäuse 62 ist teilweise ähnlich ausgestaltet wie das Sauggerät-Kommunikationsmodul 42, hat also auch einen Steckvorsprung 43, an dem Modul-Kontakte 44 zur Herstellung einer elektrischen Verbindung mit den Modul-Kontakten 36 der Modulaufnahme 34 vorgesehen sind. Somit können die im Innern des Ladergehäuses 62 angeordneten Anpassungsmittel 67 vom Sauggerät 10, d.h. beispielsweise über das Anschlusskabel 27, mit elektrischer Energie versorgt werden, um die Ladespannung L bereitzustellen.

Eine zusätzliche Fixierung des Lademoduls 60 am Saugergehäuse 11 bzw. der Modulaufnahme 34 kann beispielsweise durch Schrauben 69 erfolgen, die in korrespondierende Schrauböffnungen 38 der Modulaufnahme 34 einschraubbar sind. Auch ein magnetischer Halt, ein Verrasten oder dergleichen des Lademoduls 60 am Saugergehäuse 11 ist ohne weiteres möglich, jedoch in der Zeichnung nicht dargestellt. Das Sauggerät-Kommunikationsmodul 42 kann zweckmäßigerweise auch entsprechende Haltemittel (Schrauben, Magnete, Rastmittel) aufweisen, um in der Modulaufnahme 34 einen sicheren Halt zu finden.

Weiterhin ist es zweckmäßig, in der Zeichnung jedoch nicht dargestellt, dass das Lademodul 60 beziehungsweise die Ladeeinrichtung 61 einen integralen Bestandteil des Sauggeräts 10 bildet, das heißt dass beispielsweise das Ladergehäuse 62 und das Saugergehäuse 11 einstückig sind.

Selbstverständlich können auch an einer anderen Stelle des Saugergehäuses 11 eine Halterung in der Art der Halterung 63 und Ladekontakte in der Art der Ladekontakte 65 angeordnet sein, beispielsweise oben im Bereich der Aufnahme 28, wo das zu ladende Energiespeichermodul geschützt untergebracht werden kann, also weniger exponiert ist als im Bereich der Bedienwand 22.

Die durch das Lademodul 60 gebildete Sauggerät-Kommunikationseinrichtung 140 weist beispielsweise einen Sauggerät-Empfänger 141r auf. Über die Modul-Kontakte 36 wird das Lademodul 60 mit elektrischer Energie, beispielsweise einer Versorgungsspannung V, versorgt. Ein Stromsensor 49 an Bord des Sauggeräts 10, zum Beispiel als Bestandteil oder in Verbindung mit der Steuereinrichtung 37, erfasst beispielsweise, ob über die Modul-Kontakte 36 ein elektrischer Strom fließt.

Wenn das Lademodul 60 über seinen Sauggerät-Empfänger 141r und eine beispielsweise in das Ladergehäuse 62 integrierte Antenne 146 ein Steuersignal 51, 151, 251 zum Einschalten des Saugmotors 19 erhält, beginnt es mit dem Ladevorgang des Energiespeichermoduls 90, erzeugt also aus der Versorgungsspannung V die Ladespannung L, so dass ein Ladestrom I fließt. Ein zur Bereitstellung des Ladestroms I notwendiger Eingangsstrom E wird von dem Stromsensor 49 erfasst. Das Sauggerät 10 erkennt also, dass ein elektrischer Verbraucher Strom benötigt und schaltet in an sich bekannter Weise den Saugmotor 19 daraufhin ein.

Wenn Steuersignal 51, 151, 251 dazu instruiert, den Saugmotor 19 abzuschalten oder dessen Leistung zu verringern, reduziert die Sauggerät-Kommunikationseinrichtung 140 bzw. das Lademodul 60 die Stromzufuhr in das Energiespeichermodul 90 oder schaltet den Ladevorgang ab, so dass eingangsseitig (Versorgungsspannung V) kein durch den Stromsensor 49 erfassbarer Eingangsstrom E oder ein unterhalb einer Erfassungsschwelle liegender Eingangsstrom E fließt und somit beispielsweise die Steuereinrichtung 37 den Saugmotor 19 abschaltet. Somit kann also beispielsweise das Lademodul 60 quasi eine netzgebundene elektrische Hand-Werkzeugmaschine simulieren, die über das Sauggerät 10 mit elektrischer Energie versorgt wird - was tatsächlich jedoch nicht der Fall ist.

Es ist auch möglich, dass die Ladeeinrichtung 61 von dem Energiespeicher 26 an Bord des Sauggeräts 10 mit elektrischer Energie versorgt wird. Beispielsweise steuert die Steuereinrichtung 37 die Bereitstellung elektrischer Energie an den Modul-Kontakten 36. Bevorzugt ist dabei vorgesehen, dass die Steuereinrichtung 37 beispielsweise die Leistungsabgabe an den Modul-Kontakten 36 absenkt, wenn der Saugmotor 19 läuft, anschließend wieder anhebt. Somit wird beispielsweise ein Netzteil des Sauggeräts 10, das die Ladespannung L bereitstellt, weniger stark belastet.

Die an Bord des Sauggeräts 10 befindlichen oder mit diesem verbundenen Sauggerät-Kommunikationseinrichtungen 40 und/oder 140 und die Extern-Kommunikationseinrichtungen 50, 150, 250 eignen sich auch für eine Anmeldeprozedur, bei der das Sauggerät 10 mindestens einen Betriebsparameter 400 und/oder mindestens eine Identifikationskennung 410 an das externe Gerät, beispielsweise die Hand-Werkzeugmaschine 80 und/oder deren Energiespeichermodul 90 sendet und/oder in umgekehrter Richtung das an das Sauggerät 10 anzuschließende Gerät, beispielsweise die Hand-Werkzeugmaschine 80 oder deren Energiespeichermodul 90 mindestens einen Betriebsparameter 450 und/oder mindestens eine Identifikationskennung 460 an das Sauggerät 10 sendet, so dass nur zueinander passende Paare von Sauggerät und Hand-Werkzeugmaschine verwendet werden und/oder die Betriebsparameter des Sauggeräts 10 und der Hand-Werkzeugmaschine 80 oder 180 so eingestellt werden, dass ein optimaler Betrieb der jeweiligen Hand-Werkzeugmaschine 80 oder 180 an dem Sauggerät 10 möglich ist.

Wenn beispielsweise die Saugleistung des Sauggeräts 10 für den Betrieb der Hand-Werkzeugmaschine nicht ausreicht, kann anhand der nachfolgend im Detail beschriebenen Prozedur verhindert werden, das das Sauggerät 10 im Zusammenhang mit der Hand-Werkzeugmaschine 80 verwendet wird. Wenn die Saugleistung jedoch für beispielsweise die Hand-Werkzeugmaschine 180 ausreicht, können das Sauggerät 10 und die Hand-Werkzeugmaschine 180 miteinander verwendet werden.

Weiterhin ist es vorteilhaft möglich, dass das Sauggerät 10 und die jeweils angeschlossene Hand-Werkzeugmaschine 80 oder 180 ihre jeweiligen Leistungen aufeinander abstimmen, indem sich das eine Gerät beim anderen Gerät und/oder umgekehrt anmeldet.

An dieser Stelle sei bemerkt, dass zwar eine leitungslose Kommunikation zwischen der Hand-Werkzeugmaschine 80 und 180 einerseits und dem Sauggerät 10, insbesondere deren Sauggerät-Kommunikationseinrichtungen 40, 140 zweckmäßig ist, jedoch nicht ausschließt, dass insbesondere für die nachfolgend beschriebene Anmeldeprozedur oder Identifikationsprozedur, aber auch das Senden von Meldesignalen und/oder Steuersignalen, eine leitungsgebundene Kommunikation, zumindest in einer Richtung (vom Sauggerät zur Hand-Werkzeugmaschine oder umgekehrt) im Rahmen der Erfindung liegt. Mit anderen Worten kann beispielsweise in eine Richtung, das heißt beispielsweise vom Sauggerät zur Hand-Werkzeugmaschine leitungsgebunden, in umgekehrter Richtung leitungslos kommuniziert werden oder auch umgekehrt.

Beispielsweise verläuft in dem Saugschlauch 18 zu diesem Zweck mindestens eine Kommunikationsleitung 300, zum Beispiel eine elektrische Leitung und/oder ein optischer Leiter, an die einerseits beispielsweise die Sauggerät-Kommunikationseinrichtungen 40 und/oder die Steuereinrichtung 37 oder auch eine sonstige Komponente an Bord des Sauggeräts 10 angeschlossen ist, um mit der Hand-Werkzeugmaschine 80 oder 180 zu kommunizieren. Auf Seiten der Hand-Werkzeugmaschine 80 oder 180 kann beispielsweise die Extern-Kommunikationseinrichtung 150 oder 250 mit der mindestens einen Kommunikationsleitung 300 verbunden sein.

Beispielsweise sendet die Extern-Kommunikationseinrichtung 150 oder 250 die die Hand-Werkzeugmaschine 80 identifizierende Identifikationskennung 460 an das Sauggerät 10.

Die Sauggerät-Kommunikationseinrichtung 40 empfängt die Identifikationskennung 460 und leitet diese beispielsweise an die Steuereinrichtung 37 weiter, welche anhand der Identifikationskennung 460 beispielsweise den Typ der Hand-Werkzeugmaschine 80 erkennt, beispielsweise welche Partikelmenge von dieser Hand-Werkzeugmaschine 80 zu erwarten ist, welche Saugleistung dementsprechend vom Sauggerät 10 zu erbringen ist oder dergleichen.

Die Steuereinrichtung 37 stellt dementsprechend die Funktion des Sauggerätes 10 ein, beispielsweise derart, dass an dem Stellschalter 24 zwar die Saugleistung des Saugmotors 19 einstellbar ist, jedoch nicht unterhalb eines Grenzwertes, der eine zuverlässige Absaugung der Partikel ermöglicht, die die Hand-Werkzeugmaschine 80 erzeugt.

Es ist auch möglich, dass die Steuereinrichtung 37 überprüft, ob ein Betrieb der Hand-Werkzeugmaschine 80 mit dem Sauggerät 10 überhaupt möglich ist, so mindestens ein Kriterium erfüllt ist. Wenn beispielsweise zu beachten ist, dass das Sauggerät 10 im Zusammenhang mit der jeweiligen Hand-Werkzeugmaschine einen Explosionsschutz bereitstellen soll und/oder mindestens eine vorbestimmte Absaugleistung des Sauggeräts 10 erforderlich ist, damit das mindestens eine Kriterium erfüllt ist, kann die Steuereinrichtung 37 ermitteln, ob die Identifikationskennung 460 in einer Tabelle 430 angegeben ist, die mehrere Identifikationskennungen enthält. Wenn dies der Fall ist, gibt die Steuereinrichtung 37 das Sauggerät 10 für einen Betrieb mit der Hand-Werkzeugmaschine 80 frei.

Je nach an der Hand-Werkzeugmaschine 80 verwendetem Werkzeug 82 kann auch die Art der Partikel unterschiedlich sein, beispielsweise größere Späne oder kleinere Späne umfassen. Dementsprechend ist es zweckmäßig, wenn die Hand-Werkzeugmaschine 80 beispielsweise als einen Betriebsparameter 450 eine Information über das verwendete Werkzeug 82 an die Sauggerät-Kommunikationseinrichtungen 40 oder 140 sendet. In Abhängigkeit von der Beschaffenheit der Partikel, die der Betriebsparameter 450 dann repräsentiert, kann beispielsweise die Steuereinrichtung 37 Abreinigungsintervalle einer Abreinigungseinrichtung 9, die einen Filter 8, der den Saugmotor 19 vorgelagert ist, abreinigt, einstellen.

Auch auf Seiten der Hand-Werkzeugmaschine 80 ist es vorteilhaft, wenn sich das Sauggerät 10 sozusagen vor dem Beginn eines Betriebes anmeldet. So sendet beispielsweise die Sauggerät-Kommunikationseinrichtung 40 eine Identifikationskennung 410 des Sauggeräts 10 und/oder mindestens einen Betriebsparameter 400 an die Hand-Werkzeugmaschine 80.

Eine Steuerung 88 an Bord der Hand-Werkzeugmaschine 80 überprüft beispielsweise anhand einer Prüftabelle, ob die Identifikationskennung 410 das Sauggerät 10 derart klassifiziert, dass es im Zusammenhang mit der Hand-Werkzeugmaschine 80 verwendet werden kann. Nur dann gibt die Steuerung 88 den Antriebsmotor 81 frei. Ansonsten blockiert die Steuerung 88 den Antriebsmotor 81, so dass beispielsweise gesundheitliche Beeinträchtigungen eines Nutzers der Hand-Werkzeugmaschine 80 durch nicht abgesaugte Partikel vermieden werden können.

Anhand des Betriebsparameters 400 kann das Sauggerät 10 der Hand-Werkzeugmaschine 80 beispielsweise mitteilen, welche Saugleistung zur Verfügung stehen kann. Die Hand-Werkzeugmaschine 80 reduziert dann beispielsweise eine Maximaldrehzahl des Antriebsmotors 81, so dass selbst bei einer höchsten am Schalter 87 einstellbaren Drehzahl des Antriebsmotors 81 die Absaugleistung des Sauggeräts 10 ausreicht, um zuverlässig alle anfallenden Partikel oder zumindest im Wesentlichen alle Partikel vom Arbeitsbereich der Hand-Werkzeugmaschine 80 abzusaugen.

Weiterhin können die Extern-Kommunikationseinrichtungen 150 oder 250 und/oder die Sauggerät-Kommunikationseinrichtungen 40 oder 140 anhand der jeweils empfangenen Identifikationskennung wenn der 410, 460 und/oder der empfangenen Betriebsparameter 400, 450 unmittelbar Steuersignale und/oder Meldesignale erzeugen und an die jeweils andere Kommunikationseinrichtungen versenden.

Wenn beispielsweise die Identifikationskennung 410 das Sauggerät 10 einer bestimmten Leistungsklasse zuordnet, kann die Extern-Kommunikationseinrichtungen 150 und/oder 250 anhand der Identifikationskennung 410 beispielsweise ermitteln, dass das Sauggerät 10 eine bestimmte Leistung erbringen muss und sendet dementsprechend ein Steuersignal 351, das das Sauggerät 10 dazu instruiert, eine bestimmte Leistungsstufe als eine minimal am Stellschalter 24 einstellbare Leistungsstufe einzustellen. Selbstverständlich kann anstelle des Steuersignals 351 auch ein Meldesignal 352 generiert werden, das beispielsweise von der Anzeige 102 angezeigt wird.

Das Sauggerät 10 bzw. die Sauggerät-Kommunikationseinrichtungen 40, 140 können auch in dieser Weise ausgestaltet sein. Beispielsweise ermitteln die Sauggerät-Kommunikationseinrichtungen 40, 140 und/oder das Sauggerät 10, beispielsweise die Steuereinrichtung 37, anhand der Identifikationskennung 460 oder des Betriebsparameters 450, welche Drehzahlen des Antriebsmotors 81 der Hand-Werkzeugmaschine 80 einzustellen oder einstellbar sind und sendet dementsprechend ein Steuersignal 353 und/oder ein Meldesignal 354 an die Extern-Kommunikationseinrichtungen 150 oder 250. Das Steuersignal 353 instruiert diese dazu, beispielsweise der Steuereinrichtung 88 mitzuteilen, welche Leistungen des Antriebsmotors 81 am Schalter 87 einstellbar sein sollen. Die Informationen des Meldesignals 354 werden beispielsweise an der Anzeige 104 angezeigt, so dass der Bediener weiß, welche Leistungsbereiche an der Hand-Werkzeugmaschine 80 vorzugsweise einzustellen sind und/oder welche Werkzeuge verwendbar sind oder dergleichen.

## Patentansprüche

1. Sauggerät (10) zum Absondern von Partikeln aus einem Saugstrom (20), mit einem Saugmotor (19) zum Erzeugen des Saugstroms (20) und mit einem Saugergehäuse (11), in dem der Saugmotor (19) und ein Staubsammelraum (15) zum Sammeln der aus dem Saugstrom (20) abgesonderten Partikel angeordnet ist, wobei es eine Ladeeinrichtung (61) zum Aufladen eines elektrischen Energiespeichermoduls (90) einer Hand-Werkzeugmaschine (80) aufweist, wobei die Ladeeinrichtung (61) elektrische Ladekontakte (65) zur Bereitstellung einer Ladespannung (L) für das elektrische Energiespeichermodul (90) umfasst, **dadurch gekennzeichnet, dass** das Sauggerät (10) einen internen wiederaufladbaren elektrischen Energiespeicher (26) und/oder Energieerzeugungsmittel zur Bereitstellung elektrischer Energie für die Ladeeinrichtung (61) aufweist.

2. Sauggerät nach Anspruch 1, **dadurch gekennzeichnet, dass** die Ladeeinrichtung (61) eine Halterung (63) zum Halten des elektrischen Energiespeichermoduls (90) während des Ladevorgangs umfasst.

3. Sauggerät nach Anspruch 2, **dadurch gekennzeichnet, dass** die Halterung (63) mindestens eine Steckaufnahme und/oder mindestens einen Steckvorsprung zur Herstellung einer formschlüssigen Steckverbindung mit dem Energiespeichermodul (90) aufweist und/oder dass die Halterung (63) an einer zur Bedienung des Sauggeräts (10) vorgesehenen Bedienwand (22) des Saugergehäuses (11) angeordnet ist.

4. Sauggerät nach einem der vorhergehenden Ansprüche, **dadurch gekennzeichnet, dass** die Ladeeinrichtung (61) eine elektrische Sauggerät-Kommunikationseinrichtung (40; 140), insbesondere zum Einschalten und Ausschalten und/oder zur Einstellung einer elektrischen Leistung des Saugmotors (19), umfasst oder bildet.

5. Sauggerät nach Anspruch 4, **dadurch gekennzeichnet, dass** die Ladeeinrichtung (61) eine Sauggerät-Kommunikationseinrichtung oder einen Sauggerät-Empfänger (41r, 141r) zum Empfang mindestens eines durch eine Extern-Kommunikationseinrichtung (50; 150; 250) gesendeten, leitungslosen Steuersignals (51; 151, 251) und/oder Meldesignals (101) aufweist, wobei die Ladeeinrichtung (61) und zur Ansteuerung des Saugmotors (19), insbesondere zum Einschalten und Ausschalten, anhand der mindestens einen leitungslosen Steuersignals (51; 151, 251) ausgestaltet ist und/oder zur Steuerung des Ladevorgangs des elektrischen Energiespeichermoduls (90) anhand des Meldesignals (101) oder zur Ausgabe des Meldesignals (101) ausgestaltet ist.

6. Sauggerät nach Anspruch 5, **dadurch gekennzeichnet, dass** die Ladeeinrichtung (61) einen Ladestrom (I) zur Aufladung des Energiespeichermoduls (90) in Abhängigkeit von dem mindestens einen leitungslosen Steuersignal (51; 151, 251) schaltet, insbesondere den Ladestrom (I) bei einem Einschaltsignal für den Saugmotor (19) einschaltet und bei einem Ausschaltsignal für den Saugmotor (19) ausschaltet.

7. Sauggerät nach einem der vorhergehenden Ansprüche, **dadurch gekennzeichnet, dass** die Ladeeinrichtung (61) über den internen elektrischen Energiespeicher (26) und/oder die Energieerzeugungsmittel mit elektrischer Energie zur Aufladung des Energiespeichermoduls (90) versorgbar ist.

8. Sauggerät nach einem der vorhergehenden Ansprüche, **dadurch gekennzeichnet, dass** es eine insbesondere einen Teil der Ladeeinrichtung (61) bildende Steuerungseinrichtung (37) zur Steuerung einer elektrischen Aufladung des internen elektrischen Energiespeichers (26) und des Energiespeichermoduls (90) aufweist derart, dass unter Beachtung elektrischer Leistungsgrenzen bevorzugt der interne elektrische Energiespeicher (26) aufgeladen wird.

9. Sauggerät nach einem der vorhergehenden Ansprüche, **dadurch gekennzeichnet, dass** es eine insbesondere einen Teil der Ladeeinrichtung (61) bildende Steuerungseinrichtung zur Steuerung einer elektrischen Aufladung des Energiespeichermoduls (90) in Abhängigkeit von einem Betrieb des Saugmotors (19) aufweist.

10. Sauggerät nach einem der vorhergehenden Ansprüche, **dadurch gekennzeichnet, dass** die Ladeeinrichtung (61) Überwachungsmittel (75) zur Überwachung des Ladestroms (I) und/oder des Ladezustands des Energiespeichermoduls (90) aufweist.

11. Sauggerät nach einem der vorhergehenden Ansprüche, **dadurch gekennzeichnet, dass** die Ladeeinrichtung (61) einen integralen Bestandteil des Sauggeräts (10) bildet, wobei die elektrischen Ladekontakte (65) an dem Saugergehäuse (11) angeordnet sind.

12. Sauggerät nach einem der Ansprüche 1 bis 11, **dadurch gekennzeichnet, dass** die Ladeeinrichtung (61) als ein von dem Saugergehäuse (11) separates, ein Ladergehäuse (62) aufweisendes Lademodul (60) ausgestaltet ist und an dem Saugergehäuse (11) eine Modulaufnahme für das Lademodul (60) vorhanden ist, mit der das Lademodul (60) lösbar verbindbar ist, wobei die Modulaufnahme elektrische Modul-Kontakte (36, 44) zur elektrischen Verbindung des Lademoduls (60) mit in dem Saugergehäuse (11) angeordneten elektrischen Komponenten des Sauggeräts (10) umfasst.

13. Lademodul (60) für ein Sauggerät (10) nach Anspruch 12, **dadurch gekennzeichnet, dass** das Lademodul (60) eine Ladeeinrichtung (61) zum Aufladen eines elektrischen Energiespeichermoduls (90) einer Hand-Werkzeugmaschine (80) bildet, wobei die Ladeeinrichtung (61) elektrische Ladekontakte (65) zur Bereitstellung einer Ladespannung (L) für das elektrische Energiespeichermodul (90) umfasst, und dass das Lademodul (60) als ein von dem Saugergehäuse (11) des Sauggeräts (10) separates, ein Ladergehäuse (62) aufweisendes Lademodul (60) ausgestaltet ist und mit einer an dem Saugergehäuse (11) vorgesehenen Modulaufnahme für das Lademodul (60) lösbar verbindbar ist, wobei das Lademodul (60) zur elektrischen Verbindung mit in dem Saugergehäuse (11) angeordneten elektrischen Komponenten des Sauggeräts (10) elektrische Modul-Kontakte (44) umfasst, die mit Modul-Kontakten (34) der Modulaufnahme elektrisch verbindbar sind.

14. System welches ein Energiespeichermodul (90) und entweder das Sauggerät (10) gemäss Ansprüchen 1-12 oder das Lademodul (60) nach Anspruch 13 umfasst, wobei das Energiespeichermodul (90) für eine Hand-Werkzeugmaschine geeignet oder als Bestandteil einer Hand-Werkzeugmaschine ausgeführt ist, wobei das elektrische Energiespeichermodul (90) zur Aufladung an dem Sauggerät nach einem der Ansprüche 1 bis 12 oder dem Lademodul (60) nach Anspruch 13 vorgesehen ist wobei das Energiespeichermodul (90) zweckmäßigerweise eine Extern-Kommunikationseinrichtung (50; 150; 250) zur insbesondere drahtlosen Kommunikation mit einer Sauggerät-Kommunikationseinrichtung (40; 140) an Bord des Sauggeräts (10) oder des Lademoduls (60) aufweist, wobei die Extern-Kommunikationseinrichtung (50; 150; 250) einen Extern-Empfänger (55r, 155r, 255r) zum Empfangen des Steuersignals (108) und/oder Meldesignals (105) von der Sauggerät-Kommunikationseinrichtung (40; 140) und/oder einen Extern-Sender (55s, 155s, 255s) zum Senden mindestens eines Steuersignals (51, 151, 251) und/oder Meldesignals (101, 201) an die Sauggerät-Kommunikationseinrichtung (40; 140) aufweist.

## Claims

1. Suction device (10) for separating particles from a suction flow (20), with a suction motor (19) for generating the suction flow (20) and with a suction device housing (11) in which the suction motor (19) and a dust collecting chamber (15) for collecting the particles separated from the suction flow (20) are located, wherein it comprises a charging device (61) for charging an electric energy storage module (90) of a hand-operated power tool (80), wherein the charging device (61) comprises electric charging contacts (65) for the provision of a charging voltage (L) for the electric energy storage module (90), **characterised in that** the suction device (10) has an internal rechargeable electric energy storage device (26) and/or energy generating means for providing electric energy for the charging device (61).

2. Suction device according to claim 1, **characterised in that** the charging device (61) comprises a holder (63) for holding the electric energy storage module (90) during the charging process.

3. Suction device according to claim 2, **characterised in that** the holder (63) has at least one plug-in receptacle and/or at least one plug-in projection for establishing a positive plug-in connection to the energy storage module (90), and/or **in that** the holder (63) is located on an operating wall (22) of the suction device housing (11) provided for the operation of the suction device (10).

4. Suction device according to any of the preceding claims, **characterised in that** the charging device (61) comprises or forms an electric suction device communication device (40; 140), in particular for switching the suction motor (19) on and off and/or for adjusting an electric power thereof.

5. Suction device according to claim 4, **characterised in that** the charging device (61) has a suction device communication device or a suction device receiver (41r, 141r) for receiving at least one wireless control signal (51; 151, 251) and/or status signal (101) transmitted by an external communication device (50; 150; 250), wherein the charging device (61) is designed to activate the suction motor (19), in particular to switch it on and off using the at least one wireless control signal (51; 151, 251), and/or to control the charging process of the electric energy storage module (90) in response to the status signal (101), or to output the status signal (101) .

6. Suction device according to claim 5, **characterised in that** the charging device (61) switches a charging current (I) for charging the energy storage module (90) in response to the at least one wireless control signal (51; 151, 251), in particular switching the charging current (I) on at a switch-on signal for the suction motor (19) and off at a switch-off signal for the suction motor (19).

7. Suction device according to any of the preceding claims, **characterised in that** the charging device (61) can be supplied with electric energy for charging the energy storage module (90) via the internal electric energy storage device (26) and/or the energy generating means.

8. Suction device according to any of the preceding claims, **characterised in that** it has a control device (37), which forms a part of the charging device (61) in particular, for controlling an electric charge of the internal electric energy storage device (26) and the energy storage module (90) in such a way that the internal electric energy storage device (26) is preferably charged with due regard to electric power limits.

9. Suction device according to any of the preceding claims, **characterised in that** it has a control device, which forms a part of the charging device (61) in particular, for controlling an electric charge of the energy storage module (90) in response to an operation of the suction motor (19).

10. Suction device according to any of the preceding claims, **characterised in that** the charging device (61) has monitoring means (75) for monitoring the charging current (I) and/or the state of charge of the energy storage module (90).

11. Suction device according to any of the preceding claims, **characterised in that** the charging device (61) forms an integral part of the suction device (10), the electric charging contacts (65) being located on the suction device housing (11).

12. Suction device according to any of claims 1 to 11, **characterised in that** the charging device (61) is designed as a charging module (60), which is separate from the suction device housing (11) and has a charger housing (62), and **in that** the suction device housing (11) is provided with a module receptacle for the charging module (60), to which the charging module (60) can be releasably connected, wherein the module receptacle comprises electric module contacts (36, 44) for electrically connecting the charging module (60) to the electric components of the suction device (10) which are located in the suction device housing (11).

13. Charging module (60) for a suction device (10) according to claim 12, **characterised in that** the charging module (60) forms a charging device (61) for charging an electric energy storage module (90) of a hand-operated power tool (80), wherein the charging device (61) comprises electric charging contacts (65) for providing a charging voltage (L) for the electric energy storage module (90), and **in that** the charging module (60) is designed as a charging module (60) separate from the suction device housing (11) of the suction device (10) and having a charger housing (62), and can be releasably connected to a module receptacle provided on the suction device housing (11) for the charging module (60), wherein the charging module (60) comprises electric module contacts (44) for an electric connection to electric components of the suction device (10) which are located in the suction device housing (11), which module contacts (44) can be electrically connected to module contacts (34) of the module receptacle.

14. System comprising an energy storage module (90) and either the suction device (10) according to any of claims 1 to 12 or the charging module (60) according to claim 13, wherein the energy storage module (90) is suitable for a hand-operated power tool or is designed as part of a hand-operated power tool, wherein the electric energy storage module (90) is provided for charging on the suction device according to any of claims 1 to 12 or on the charging module (60) according to claim 13, wherein the energy storage module (90) expediently has an external communication device (50; 150; 250) for the in particular wireless communication with a suction device communication device (40; 140) on board of the suction device (10) or the charging module (60), wherein the external communication device (50; 150; 250) has an external receiver (55r, 155r, 255r) for receiving the control signal (108) and/or the status signal (105) from the suction device communication device (40; 140) and/or an external transmitter (55s, 155s, 255s) for transmitting at least one control signal (51, 151, 251) and/or status signal (101, 201) to the suction device communication device (40; 140).

## Revendications

1. Appareil d'aspiration (10) pour la séparation de particules d'un flux d'aspiration (20), avec un moteur d'aspiration (19) pour la génération du flux d'aspiration (20) et avec un boîtier d'aspiration (11), dans lequel sont disposés le moteur d'aspiration (19) et un espace de collecte de poussières (15) pour la collecte des particules séparées du flux d'aspiration (20), dans lequel il comprend un dispositif de charge (61) pour la charge d'un module d'accumulation d'énergie électrique (90) d'une machine électroportative (80), dans lequel le dispositif de charge (61) comporte des contacts de charge électriques (65) pour la fourniture d'une tension de charge (L) au module d'accumulation d'énergie électrique (90), **caractérisé en ce que** l'appareil d'aspiration (10) comprend un accumulateur d'énergie électrique interne rechargeable (26) et/ou des moyens de production d'énergie pour fournir de l'énergie électrique au dispositif de charge (61).

2. Appareil d'aspiration selon la revendication 1, **caractérisé en ce que** le dispositif de charge (61) comporte un support (63) pour supporter le module d'accumulation d'énergie électrique (90) pendant l'opération de charge.

3. Appareil d'aspiration selon la revendication 2, **caractérisé en ce que** le support (63) comprend au moins un logement d'insertion et/ou au moins une protubérance d'insertion pour réaliser une liaison par insertion par complémentarité de forme avec le module d'accumulation d'énergie (90) et/ou **en ce que** le support (63) est disposé au niveau d'une paroi de fonctionnement (22) du boîtier d'aspiration (11) prévue pour le fonctionnement de l'appareil d'aspiration (10).

4. Appareil d'aspiration selon l'une quelconque des revendications précédentes, **caractérisé en ce que** le dispositif de charge (61) comprend ou forme un dispositif de communication d'appareil d'aspiration électrique (40 ; 140), en particulier pour la mise en tension et la mise hors tension et/ou pour le réglage d'une puissance électrique du moteur d'aspiration (19).

5. Appareil d'aspiration selon la revendication 4, **caractérisé en ce que** le dispositif de charge (61) présente un dispositif de communication d'appareil d'aspiration ou un récepteur d'appareil d'aspiration (41r, 141r) pour la réception d'au moins un signal de commande (51 ; 151, 251) et/ou un signal d'état (101) sans fil, envoyé par un dispositif de communication externe (50 ; 150 ; 250), dans lequel le dispositif de charge (61) est conçu pour la commande du moteur d'aspiration (19), en particulier pour la mise sous tension et la mise hors tension, à l'aide de l'au moins un signal de commande sans fil (51 ; 151, 251) et/ou est conçu pour la commande de l'opération de charge du module d'accumulation d'énergie électrique (90) à l'aide du signal d'état (101) ou pour la sortie du signal d'état (101).

6. Appareil d'aspiration selon la revendication 5, **caractérisé en ce que** le dispositif de charge (61) commute un courant de charge (I) pour la charge du module d'accumulation d'énergie (90) en fonction de l'au moins un signal de commande sans fil (51 ; 151, 251), en particulier met en circuit le courant de charge (I) en cas d'un signal de mise sous tension pour le moteur d'aspiration (19) et le coupe en cas d'un signal de mise hors tension pour le moteur d'aspiration (19).

7. Appareil d'aspiration selon l'une quelconque des revendications précédentes, **caractérisé en ce que** le dispositif de charge (61) peut être alimenté en énergie électrique, par le biais de l'accumulateur d'énergie électrique interne (26) et/ou des moyens de production d'énergie, pour la charge du module d'accumulation d'énergie (90).

8. Appareil d'aspiration selon l'une quelconque des revendications précédentes, **caractérisé en ce qu'**il comprend un dispositif de commande (37) formant en particulier une partie du dispositif de charge (61) pour la commande d'une charge électrique de l'accumulateur d'énergie électrique interne (26) et du module d'accumulation d'énergie (90) de manière qu'en tenant compte de limites de puissance électriques de préférence l'accumulateur d'énergie électrique interne (26) est chargé.

9. Appareil d'aspiration selon l'une quelconque des revendications précédentes, **caractérisé en ce qu'**il comprend un dispositif de commande formant en particulier une partie du dispositif de charge (61) pour la commande d'une charge électrique du module d'accumulation d'énergie (90) en fonction d'un mode de fonctionnement du moteur d'aspiration (19).

10. Appareil d'aspiration selon l'une quelconque des revendications précédentes, **caractérisé en ce que** le dispositif de charge (61) comprend des moyens de surveillance (75) pour la surveillance du courant de charge (I) et/ou l'état de charge du module d'accumulation d'énergie (90).

11. Appareil d'aspiration selon l'une quelconque des revendications précédentes, **caractérisé en ce que** le dispositif de charge (61) forme un élément constitutif de l'appareil d'aspiration (10), dans lequel les contacts de charge électriques (65) sont disposés au niveau du boîtier d'aspiration (11).

12. Appareil d'aspiration selon l'une quelconque des revendications 1 à 11, **caractérisé en ce que** le dispositif de charge (61) est conçu en tant que module de charge (60) distinct du boîtier d'aspiration (11), comprenant un boîtier de chargeur (62) et, au niveau du boîtier d'aspiration (11), pour le module de charge (60), un logement de module est présent, auquel le module de charge (60) peut être relié de manière détachable, dans lequel le logement de module comporte des contacts de module électriques (36, 44) pour la liaison électrique du module de charge (60) à des composants électriques de l'appareil d'aspiration (10) disposés dans le boîtier d'aspiration (11).

13. Module de charge (60) pour un appareil d'aspiration (10) selon la revendication 12, **caractérisé en ce que** le module de charge (60) forme un dispositif de charge (61) pour la charge d'un module d'accumulation d'énergie électrique (90) d'une machine électroportative (80), dans lequel le dispositif de charge (61) comporte des contacts de charge électriques (65) pour la fourniture d'une tension de charge (L) au module d'accumulation d'énergie électrique (90) et **en ce que** le module de charge (60) est conçu en tant que module de charge (60) distinct du boîtier d'aspiration (11) de l'appareil d'aspiration (10), comprenant un boîtier de chargeur (62), et peut être relié de manière détachable à un logement de module, prévu au niveau du boîtier d'aspiration (11), pour le module de charge (60), dans lequel le module de charge (60) comporte, pour la liaison électrique avec des composants électriques de l'appareil d'aspiration (10) disposés dans le boîtier d'aspiration (11), des contacts de module électrique (44) qui peuvent être reliés électriquement à des contacts de module (34) du logement de module.

14. Système, lequel comporte un module d'accumulation d'énergie électrique (90) et soit l'appareil d'aspiration (10) selon les revendications 1 à 12 soit le module de charge (60) selon la revendication 13, dans lequel le module d'accumulation d'énergie (90) est adapté pour une machine électroportative ou est réalisé en tant qu'élément constitutif d'une machine électroportative, dans lequel le module d'accumulation d'énergie électrique (90) est prévu pour la charge au niveau de l'appareil d'aspiration selon l'une quelconque des revendications 1 à 12 ou du module de charge (60) selon la revendication 13 ; dans lequel le module d'accumulation d'énergie (90) comprend de manière opportune un système de communication externe (50 ; 150 ; 250) pour la communication en particulier sans fil avec un dispositif de communication d'appareil d'aspiration (40 ; 140) à bord de l'appareil d'aspiration (10) ou du module de charge (60), dans lequel le dispositif de communication externe (50 ; 150 ; 250) comprend un récepteur externe (55r, 155r, 255r) pour la réception du signal de commande (108) et/ou du signal d'état (105) du dispositif de communication d'appareil d'aspiration (40 ; 140) et/ou un émetteur externe (55s, 155s, 255s) pour l'émission d'au moins un signal de commande (51, 151, 251) et/ou un signal d'état (101, 201) vers le dispositif de communication d'appareil d'aspiration (40 ; 140).
